(19) 

Europäisches Patentamt
European Patent Office
Office européen des brevets

(11)  **EP 4 502 023 A1**

(12)  **EUROPEAN PATENT APPLICATION**
published in accordance with Art. 153(4) EPC

(43) Date of publication:
05.02.2025 Bulletin 2025/06

(21) Application number: 23779144.7

(22) Date of filing: 28.02.2023

(51) International Patent Classification (IPC):
$C08J\ 9/16$ (2006.01)  $C08J\ 9/18$ (2006.01)
$B29C\ 44/00$ (2006.01)  $B29C\ 44/44$ (2006.01)

(52) Cooperative Patent Classification (CPC):
B29C 44/00; B29C 44/44; C08J 9/16; C08J 9/18

(86) International application number:
PCT/JP2023/007329

(87) International publication number:
WO 2023/189114 (05.10.2023 Gazette 2023/40)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.03.2022   JP 2022056618
30.03.2022   JP 2022056623
31.05.2022   JP 2022088917

(71) Applicant: **JSP Corporation
Tokyo 100-0005 (JP)**

(72) Inventor: **KITAHARA Taizo
Yokkaichi-shi, Mie 510-0881 (JP)**

(74) Representative: **Gille Hrabal
Partnerschaftsgesellschaft mbB
Patentanwälte
Brucknerstraße 20
40593 Düsseldorf (DE)**

(54)  **EXPANDED BEADS, AND EXPANDED BEAD MOLDED BODY**

(57)    An expanded bead containing a linear low-density polyethylene as a base resin, wherein the linear low-density polyethylene has a biomass degree of 40% or more as measured according to ASTM D 6866; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less.

EP 4 502 023 A1

Processed by Luminess, 75001 PARIS (FR)

## Description

Technical Field

The present invention relates to an expanded bead and a molded article of expanded beads.

Background Art

A molded article of polyethylene-based resin expanded beads obtained by in-mold molding of polyethylene-based resin expanded beads is excellent in chemical resistance and shock-absorbing properties, as well as recyclability. Consequently, a molded article of polyethylene-based resin expanded beads is widely used as shock absorbing materials, heat insulating materials, various packaging materials and others, including packaging/buffering materials for electric/-electronic components, packaging/buffering materials for automobile parts, and packaging materials for other precision parts as well as food products.

In recent years, biomass plastics have been developed in an attempt to replace conventional petroleum-derived resins in order to address environmental issues such as concerns about the depletion of fossil resources such as petroleum and demands for reduction of carbon dioxide emissions.

For example, PTL1 discloses polyethylene-based resin expanded beads having a biobased content of 1% or more and containing a plant-derived polyethylene-based resin with a biobased content of 80% or more as measured according to ASTM D 6866.

Since the molded article of polyethylene-based expanded beads is widely used as described above, it is required to produce various molded articles having shapes and the like according to the applications. Therefore, studies have been made to improve the in-mold moldability of polyethylene-based resin expanded beads.

PTL2 discloses non-crosslinked polyethylene-based resin expanded beads having a specific density, melt flow index, melt tension, and cell diameter, all of which are obtained by expanding polyethylene-based resin particles having a specific density, for the purpose of enabling molding in a wide temperature range and improving surface smoothness.

Citation List

Patent Literature

PTL1: JP 2013-060514 A
PTL2: JP 2000-017079 A

Summary of Invention

Technical Problem

With the technology disclosed in PTL1, however, it is difficult to produce expanded beads with low bulk density using biomass polyethylene. Since the technology disclosed in PTL1 makes in-mold moldability of the resulting expanded beads low, it is difficult to produce good molded article of expanded beads over a wide density range.

In order to produce expanded beads with good in-mold moldability, the resin that can be used as a resin constituting the expanded beads are limited, and from the viewpoint of supply stability, it is desirable to increase the variety of resins that can produce good expanded beads.

PTL2 does not disclose anything about the use of linear low-density polyethylene containing, as copolymerized components, a butene component and a hexene component as a polyethylene-based resin to produce expanded beads with good in-mold moldability.

Furthermore, since molded articles of polyethylene-based expanded beads are used in various applications as described above, there is a demand for molded article with excellent recovery properties of the shape after compression of the molded articles and low compression set. Under these circumstances, it is expected that the use of linear low-density polyethylene with low density enables the production of a molded article with good compression strength and reduced compression set.

However, in the case of using a linear low-density polyethylene with low density, the in-mold moldability of the resulting expanded beads is reduced, making it difficult to produce expanded beads that have both low compression set and in-mold moldability.

An object of the first embodiment of the present invention is to provide expanded beads that have excellent in-mold moldability and a high biomass degree and that can produce a molded article of polyethylene-based resin expanded beads over a wide density range, and a molded article of polyethylene-based resin expanded beads with high biomass degree and low apparent density.

An object of the second embodiment of the present invention is to provide expanded beads that have excellent in-mold moldability and can produce a molded article of polyethylene-based resin expanded beads over a wide density range, as well as a molded article of expanded beads with low apparent density and good molding state.

An object of the third embodiment of the present invention is to provide expanded beads that has excellent in-mold moldability and can produce a molded article of polyethylene-based resin expanded beads with small compression set.

Solution to Problem

The present inventors have assiduously studied and, as a result, have found that expanded beads which contain a linear low-density polyethylene having a specific biomass degree as a base resin and satisfy a specific heat of fusion relationship can solve the above-mentioned problems. The present inventors have also found that expanded beads which contains a linear low-density polyethylene having a specific comonomer component as a base resin and satisfy a relationship between a specific melt flow rate and a specific heat of fusion can solve above-mentioned problems.

Furthermore, the present inventors have assiduously studied and, as a result, have found that expanded beads which contain a linear low-density polyethylene as a base resin having a specific density and melting point, as well as a specific comonomer component can solve above-mentioned problems.

Specifically, one aspect of the present invention relates to expanded beads described in [1] to [23] below.

[1] An expanded bead containing a linear low-density polyethylene as a base resin, wherein the linear low-density polyethylene has a biomass degree of 40% or more as measured according to ASTM D 6866; the expanded bead has a crystal structure where a melting peak intrinsic to the linear low-density polyethylene, an intrinsic peak, and at least one melting peak on a higher temperature side than the intrinsic peak, a high-temperature peak, appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less.

[2] The expanded bead according to [1], wherein the heat of fusion at the high-temperature peak is 30 J/g or more and 50 J/g or less.

[3] The expanded bead according to [1] or [2], wherein a ratio of the heat of fusion at the high-temperature peak to the total heat of fusion of the expanded bead is 0.3 or more and 0.7 or less.

[4] The expanded bead according to any one of [1] to [3], wherein a melt flow rate of the expanded bead measured under conditions of a temperature of 190°C and a load of 2.16 kg is 0.1 g/10 min or more and 2.0 g/10 min or less.

[5] The expanded bead according to any one of [1] to [4], wherein the linear low-density polyethylene includes a linear low-density polyethylene A containing a butene component and a hexene component as copolymerization components.

[6] The expanded bead according to any one of [1] to [5], wherein the linear low-density polyethylene has a biomass degree of 70% or more as measured according to ASTM D 6866.

[7] The expanded bead according to any one of [1] to [6], wherein a bulk density of the expanded bead is 10 kg/m³ or more and 300 kg/m³ or less.

[8] The expanded bead according to any one of [1] to [7], wherein a volume percentage of closed cells in the expanded bead is 80% or more.

[9] The expanded bead according to any one of [1] to [8], wherein an average cell diameter of the expanded bead is 60 μm or more and 200 μm or less.

[10] A molded article of expanded beads produced by in-mold molding the expanded bead according to any one of [1] to [9].

[11] An expanded bead containing a linear low-density polyethylene as a base resin, wherein the linear low-density polyethylene contains a butene component and a hexene component as copolymerization components; a melt flow rate of the expanded bead measured under conditions of a temperature of 190°C and a load of 2.16 kg is 0.1 g/10 min or more and 2.0 g/10 min or less; the expanded bead has a crystal structure where a melting peak intrinsic to the linear low-density polyethylene, an intrinsic peak, and at least one melting peak on a higher temperature side than the intrinsic peak, a high-temperature peak, appear on a DSC curve drawn by heating the expanded bead from 23°C to 200°C at a heating rate of 10°C/min; a total heat of fusion of the expanded bead is 70 J/g or more and 100 J/g or less; a heat of fusion at the high-temperature peak is 30 J/g or more and 50 J/g or less; and a ratio of the heat of fusion at the high-temperature peak to the total heat of fusion of the expanded bead is 0.3 or more and 0.7 or less.

[12] The expanded bead according to [11], wherein in the linear low-density polyethylene, a content of the butene component is 0.5 mol% or more and 6 mol% or less, and a content of the hexene component is 0.2 mol% or more and 5 mol% or less.

[13] The expanded bead according to [11] or [12], wherein a bulk density of the expanded bead is 10 kg/m$^3$ or more and 300 kg/m$^3$ or less.

[14] The expanded bead according to any one of [11] to [13], wherein a volume percentage of closed cells in the expanded bead is 80% or more.

[15] The expanded bead according to any one of [11] to [14], wherein an average cell diameter of the expanded bead is 60 $\mu$m or more and 200 $\mu$m or less.

[16] A molded article of expanded beads produced by in-mold molding the expanded bead according to any one of [11] to [15].

[17] An expanded bead containing a linear low-density polyethylene as a base resin, wherein the linear low-density polyethylene has a density of 920 kg/m$^3$ or less; the linear low-density polyethylene has a melting point of 120°C or higher and 130°C or lower; and the linear low-density polyethylene comprises, as copolymerization components, a propylene component and at least one $\alpha$-olefin component ($\alpha$1) selected from the group consisting of a butene component, a hexene component, and an octene component.

[18] The expanded bead according to [17], wherein a content of the propylene component in the linear low-density polyethylene is 0.5 mol% or more and 3 mol% or less.

[19] The expanded bead according to [17] or [18], wherein a total content of the propylene component and the $\alpha$-olefin component ($\alpha$1) in the linear low-density polyethylene is 1 mol% or more and 10 mol% or less, and a ratio of the content of the propylene component to the total content of the propylene component and the $\alpha$-olefin component ($\alpha$1) is 0.1 or more and 0.6 or less.

[20] The expanded bead according to any one of [17] to [19], wherein the linear low-density polyethylene has a biomass degree of 40% or more as measured according to ASTM D 6866.

[21] The expanded bead according to any one of [17] to [20], wherein the expanded bead has a crystal structure where a melting peak intrinsic to the linear low-density polyethylene, an intrinsic peak, and at least one melting peak on a higher temperature side than the intrinsic peak, a high-temperature peak, appear on a DSC curve drawn by heating the expanded bead from 23°C to 200°C at a heating rate of 10°C/min; a heat of fusion of the expanded bead is 70 J/g or more and 100 J/g or less; and a heat of fusion at the high-temperature peak is 10 J/g or more and 50 J/g or less.

[22] The expanded bead according to [21], wherein a ratio of the heat of fusion at the high-temperature peak to the total heat of fusion of the expanded bead is 0.2 or more and 0.7 or less.

[23] The expanded bead according to any one of [17] to [22], wherein a bulk density of the expanded bead is 10 kg/m$^3$ or more and 300 kg/m$^3$ or less.

Advantageous Effects of Invention

According to the first embodiment of the present invention, it is possible to provide expanded beads that have excellent in-mold moldability and a high biomass degree and that can produce a molded article of polyethylene-based resin expanded beads over a wide density range, and a molded article of polyethylene-based resin expanded beads with high biomass degree and low apparent density.

According to the second embodiment of the present invention, it is possible to provide expanded beads that have excellent in-mold moldability and can produce a molded article of polyethylene-based resin expanded beads over a wide density range, and a molded article of expanded beads with low apparent density and good molding state. According to the second embodiment of the present invention, it is also possible to provide expanded beads excellent in in-mold moldability in expanded beads that contain, as base resin, a linear low-density polyethylene containing a butene component and a hexene component as copolymerization components, which has not been studied before.

According to the third embodiment of the present invention, it is possible to provide expanded beads that has excellent in-mold moldability and can produce a molded article of polyethylene-based resin expanded beads with small compression set.

Description of Embodiments

The expanded beads of the present invention are expanded beads containing the following linear low-density polyethylene as a base resin, and in particular, having excellent in-mold moldability.

The expanded bead in the first embodiment of the present invention is an expanded bead containing a linear low-density polyethylene as a base resin, wherein

the linear low-density polyethylene has a biomass degree of 40% or more as measured according to ASTM D 6866; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less.

The expanded bead in the second embodiment of the present invention is an expanded bead containing a linear low-density polyethylene as a base resin, wherein

the linear low-density polyethylene contains a butene component and a hexene component as copolymerization components;
a melt flow rate of the expanded bead measured under conditions of a temperature of 190°C and a load of 2.16 kg is 0.1 g/10 min or more and 2.0 g/10 min or less;
the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min;
a total heat of fusion of the expanded bead is 70 J/g or more and 100 J/g or less;
a heat of fusion at the high-temperature peak is 30 J/g or more and 50 J/g or less; and
a ratio of the heat of fusion at the high-temperature peak to the total heat of fusion of the expanded bead is 0.3 or more and 0.7 or less.

The expanded bead in the third embodiment of the present invention is an expanded bead containing a linear low-density polyethylene as a base resin, wherein

the linear low-density polyethylene has a density of 920 kg/m$^3$ or less;
the linear low-density polyethylene has a melting point of 120°C or higher and 130°C or lower; and
the linear low-density polyethylene comprises, as copolymerization components, a propylene component and at least one $\alpha$-olefin component ($\alpha$1) selected from the group consisting of a butene component, a hexene component, and an octene component.

Hereinafter, each embodiment is described in detail.

[Expanded beads (first embodiment and second embodiment)]

The expanded bead in the first embodiment of the present invention is an expanded bead containing a linear low-density polyethylene as a base resin, wherein the linear low-density polyethylene has a biomass degree of 40% or more as measured according to ASTM D 6866; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less.
The expanded bead in the second embodiment of the present invention is an expanded bead containing a linear low-density polyethylene as a base resin, wherein

the linear low-density polyethylene contains a butene component and a hexene component as copolymerization components;
a melt flow rate of the expanded bead measured under conditions of a temperature of 190°C and a load of 2.16 kg is 0.1 g/10 min or more and 2.0 g/10 min or less;
the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min;
a total heat of fusion of the expanded bead is 70 J/g or more and 100 J/g or less;
a heat of fusion at the high-temperature peak is 30 J/g or more and 50 J/g or less; and
a ratio of the heat of fusion at the high-temperature peak to the total heat of fusion of the expanded bead is 0.3 or more and 0.7 or less.

In the following description, "expanded bead(s) in the first embodiment of the present invention", "expanded bead(s) in the second embodiment of the present invention", and "expanded bead(s) in the third embodiment of the present invention" are also collectively referred to as "expanded bead(s) of the present invention".

(Linear Low-density Polyethylene)

The expanded bead contains a linear low-density polyethylene as a base resin. In the present specification, "containing linear low-density polyethylene as a base resin" means that the expanded beads are composed of a resin mainly containing linear low-density polyethylene as a main component. Note that, as described later, the expanded beads may contain, for example, polymers other than the linear low-density polyethylene within a range not detracting from the advantageous effects of the present invention.

The linear low-density polyethylene preferably has a biomass degree of 40% or more as measured according to ASTM D 6866. When the biomass degree falls within the above range, the use of fossil resources can be suppressed in the production of the molded article, and the amount of carbon dioxide emitted in the life cycle of the molded article can also be reduced.

From the above viewpoint, the biomass degree of the linear low-density polyethylene as measured according to ASTM D 6866 is more preferably 50% or more, still more preferably 60% or more, even more preferably 70% or more, further more preferably 80% or more. The upper limit is not limited, and the biomass degree of the linear low-density polyethylene as measured according to ASTM D 6866 may be 100% or less. From the viewpoint of easily enhancing the in-mold moldability of the expanded beads, however, the biomass degree of the linear low-density polyethylene as measured according to ASTM D 6866 is preferably 95% or less, more preferably 90% or less. The biomass degree is measured according to ASTM D 6866 and means the proportion of naturally-occurring components in the linear low-density polyethylene. In addition, the biomass degree is a value determined by measuring the concentration of radiocarbon $^{14}C$ against the linear low-density polyethylene. In the case of using a mixed resin in which a plurality of linear low-density polyethylene are mixed as the linear low-density polyethylene, the biomass degree of the linear low-density polyethylene may be calculated from the biomass degree of each linear low-density polyethylene used to form the mixed resin and the content proportion of each linear low-density polyethylene in the mixed resin.

The linear low-density polyethylene is a copolymer of ethylene and $\alpha$-olefin having a linear structure. Note that the linear low-density polyethylene may be a mixed resin obtained by mixing a plurality of copolymers of ethylene and $\alpha$-olefin.

The $\alpha$-olefin is preferably an $\alpha$-olefin having 3 to 20 carbon atoms, more preferably an $\alpha$-olefin having 3 to 10 carbon atoms, still more preferably an $\alpha$-olefin having 3 to 6 carbon atoms.

Specific examples of the $\alpha$-olefin include propylene, 1-butene, 1-pentene, 1-hexene, 1-octene, 4-methyl-1-butene, 3,3-dimethyl-1-butene, 4-methyl-1-pentene, 4,4-dimethyl-1-pentene, and 1-octene. Among these, from the viewpoint of stably producing expanded beads excellent in in-mold moldability, the $\alpha$-olefin preferably includes at least one selected from the group consisting of 1-butene, 1-hexene, and 4-methyl-1-pentene.

Therefore, the linear low-density polyethylene preferably contains as its main component at least one linear low-density polyethylene selected from the group consisting of linear low-density polyethylene A containing a butene component and a hexene component as copolymerization components (comonomers) and linear low-density polyethylene B containing a butene component as a copolymerization component (comonomer), more preferably contains as its main component linear low-density polyethylene A containing a butene component and a hexene component. In this case, the proportion of the total of the linear low-density polyethylene A and the linear low-density polyethylene B in the linear low-density polyethylene is 50% by mass or more, preferably 60% by mass or more, more preferably 80% by mass or more, still more preferably 90% by mass or more. The proportion of the total of the linear low-density polyethylene A and the linear low-density polyethylene B in the linear low-density polyethylene is 100% by mass or less.

From the viewpoint of more enhancing the in-mold moldability of the expanded beads, the proportion of the linear low-density polyethylene A in the linear low-density polyethylene is 50% by mass or more, preferably 60% by mass or more, more preferably 80% by mass or more, still more preferably 90% by mass or more. On the other hand, the proportion of the linear low-density polyethylene A in the linear low-density polyethylene is 100% by mass or less.

Note that the component derived from hexene in the linear low-density polyethylene containing a butene component and a hexene component as copolymerization components includes 1-hexene and 4-methyl-1-pentene.

From the viewpoint of stably producing expanded beads excellent in in-mold moldability, in the case of using linear low-density polyethylene B containing a butene component as the linear low-density polyethylene, the content of the butene component in the linear low-density polyethylene B is preferably 2 mol% or more and 7 mol% or less, more preferably 3 mol% or more and 6 mol% or less.

From the same viewpoint, in the case of using linear low-density polyethylene A containing a butene component and a hexene component as the linear low-density polyethylene, the content of the butene component in the linear low-density polyethylene A is preferably 0.5 mol% or more and 6 mol% or less, more preferably 1 mol% or more and 5 mol% or less, still more preferably 2 mol% or more and 4 mol% or less. In the case of using linear low-density polyethylene A containing a butene component and a hexene component, the content of the hexene component in the linear low-density polyethylene A is preferably 0.2 mol% or more and 5 mol% or less, more preferably 0.5 mol% or more and 4 mol% or less, still more preferably 0.8 mol% or more and 3 mol% or less.

Within a range capable of attaining the intended object of the present invention without impairing advantageous effects of the present invention, the linear low-density polyethylene may contain a component derived from propylene as an $\alpha$-olefin (copolymerization component; comonomer). In the case where the linear low-density polyethylene contains a component derived from propylene, the content of the component derived from propylene in the linear low-density polyethylene is preferably 0.3 mol% or more and 5 mol% or less, more preferably 0.5 mol% or more and 4 mol% or less, still more preferably 0.8 mol% or more and 3 mol% or less, particularly preferably 1 mol% or more and 2 mol% or less.

Note that the contents above are contents when the total of the component derived from ethylene and the component derived from an $\alpha$-olefin ($\alpha$-olefin having 3 or more carbon atoms, such as butene and hexene) is set to 100% by mass. The content of the component derived from $\alpha$-olefin in the linear low-density polyethylene is preferably 10 mol% or less, more preferably 8 mol% or less. The content of the component derived from $\alpha$-olefin in the linear low-density polyethylene is preferably 0.5 mol% or more, more preferably 1 mol% or more.

The content of the component derived from $\alpha$-olefin in the linear low-density polyethylene can be determined, for example, by carbon-13 NMR spectroscopy ($^{13}$C-NMR) measurement, which will be described in Examples.

From the same viewpoint, in the case of using a linear low-density polyethylene A containing a butene component (component derived from butene) and a hexene component (component derived from hexene) as the linear low-density polyethylene, the ratio of the content of the component derived from hexene to the content of the component derived from butene [hexene component content (mol%)/butene component content (mol%)] in the linear low-density polyethylene A is preferably 0.1 or more and 2 or less, more preferably 0.2 or more and 1 or less, still more preferably 0.3 or more and 0.8 or less.

In addition, in the case where the linear low-density polyethylene contains a component derived from propylene as a copolymerization component, the ratio of the content of the component derived from propylene to the content of the component derived from an $\alpha$-olefin other than propylene (for example, butene and/or hexene) [propylene component content (mol%)/ $\alpha$-olefin component content other than propylene (mol%)] in the linear low-density polyethylene is preferably 0.1 or more and 2 or less, more preferably 0.2 or more and 1 or less, still more preferably 0.3 or more and 0.7 or less. The ratio of the content of the component derived from propylene to the total content of the component derived from butene and the component derived from hexene [propylene component content (mol%)/{ hexene component content (mol%) + butene component content (mol%)}] is preferably 0.1 or more and 2 or less, more preferably 0.2 or more and 1 or less, still more preferably 0.3 or more and 0.7 or less.

The melting point of the linear low-density polyethylene is, from the viewpoint of enhancing the mechanical properties of the resultant molded articles, preferably 110°C or higher, more preferably 120°C or higher, still more preferably 122°C or higher. On the other hand, the melting point of the linear low-density polyethylene is, from the viewpoint of enhancing the in-mold moldability of the expanded beads under a low molding pressure condition, preferably 135°C or lower, more preferably 130°C or lower, still more preferably 126°C or lower.

The melting point of the linear low-density polyethylene is measured based on JIS K 7121 :2012, using a test piece of the linear low-density polyethylene. Specifically, for the measurement, the method described in the section of Examples is referred to.

The melt flow rate of the linear low-density polyethylene measured under conditions of a temperature of 190°C and a load of 2.16 kg is preferably 0.1 g/10 min or more and 2.0 g/10 min or less. When the melt flow rate of the linear low-density polyethylene falls within the above range, the in-mold moldability of the expanded beads can be enhanced.

The melt flow rate of the linear low-density polyethylene is more preferably 0.3 g/10 min or more, still more preferably 0.5 g/10 min or more, and even more preferably 0.7 g/10 min or more. The melt flow rate of the linear low-density polyethylene is more preferably 1.8 g/10 min or less, still more preferably 1.5 g/10 min or less, and even more preferably 1.4 g/10 min or less.

Note that the melt flow rate of the linear low-density polyethylene is a value measured under conditions of a temperature of 190°C and a load of 2.16 kg. More specifically, the melt flow rate can be measured according to JIS K 7210-1:2014 by the method described in the section of Examples.

The density of the linear low-density polyethylene is preferably 910 kg/m$^3$ or more and 940 kg/m$^3$ or less, and from the viewpoint of easily producing expanded beads having desired physical properties, more preferably 910 kg/m$^3$ or more and 935 kg/m$^3$ or less, still more preferably 912 kg/m$^3$ or more and 930 kg/m$^3$ or less, even more preferably 914 kg/m$^3$ or more and 928 kg/m$^3$ or less.

The density of the linear low-density polyethylene is measured by Method A (underwater displacement method) described in JIS K 7112:1999.

From the viewpoint of easily producing expanded beads having desired physical properties, the heat of fusion of the linear low-density polyethylene is preferably 60 J/g or more, more preferably 70 J/g or more, still more preferably 75 J/g or more. Also, from the same viewpoint, the heat of fusion of the linear low-density polyethylene is preferably 120 J/g or less, more preferably 110 J/g or less, still more preferably 100 J/g or less, particularly preferably 90 J/g or less.

The heat of fusion of the linear low-density polyethylene can be determined from the DSC curve obtained by carrying out differential scanning calorimetry (DSC) according to JIS K 7122:2012 using a test piece of the linear low-density polyethylene. Specifically, the heat of fusion can be measured according to the method described in the section of Examples.

[Expanded beads (third embodiment)]

The expanded bead in the third embodiment of the present invention is an expanded bead containing a linear low-density polyethylene as a base resin, wherein the linear low-density polyethylene has a density of 920 kg/m$^3$ or less; the linear low-density polyethylene has a melting point of 120°C or higher and 130°C or lower; and the linear low-density polyethylene contains, as copolymerization components, a propylene component and at least one $\alpha$-olefin component ($\alpha$1) selected from the group consisting of a butene component, a hexene component, and an octene component.

(Linear Low-density Polyethylene)

The expanded bead in the third embodiment contains a linear low-density polyethylene as a base resin. In the present specification, "containing linear low-density polyethylene as a base resin" means that the expanded beads are composed of a resin mainly containing linear low-density polyethylene as a main component. Note that, as described later, the expanded beads may contain, for example, polymers other than the linear low-density polyethylene within a range not detracting from the advantageous effects of the present invention.

In the third embodiment of the present invention, the base resin is a linear low-density polyethylene having a density of 920 kg/m$^3$ or less and containing, as copolymerization components, a propylene component and at least one $\alpha$-olefin component ($\alpha$1) selected from the group consisting of a butene component, a hexene component, and an octene component. Note that the hexene component in the linear low-density polyethylene includes 1-hexene and 4-methyl-1-pentene. The octene component in the linear low-density polyethylene includes 1-octene, 2-methylheptene, and 3-ethylhexene.

The linear low-density polyethylene in the third embodiment contains, as copolymerization components, a propylene component and at least one $\alpha$-olefin component ($\alpha$1) selected from the group consisting of a butene component, a hexene component, and an octene component. Namely, the linear low-density polyethylene in the third embodiment contains, as copolymerization components, a propylene component and also at least one $\alpha$-olefin component ($\alpha$1) selected from the group consisting of a butene component, a hexene component, and an octene component. In other words, the linear low-density polyethylene in the third embodiment contains, as copolymerization components, a propylene component and $\alpha$-olefin component ($\alpha$1), and the $\alpha$-olefin component ($\alpha$1) is at least one selected from the group consisting of a butene component, a hexene component, and an octene component. Note that the linear low-density polyethylene in the third embodiment of the present invention can also be said to be a copolymer of ethylene, propylene, and at least one $\alpha$-olefin selected from the group consisting of butene, hexene, and octene, each of which has a linear structure.

Normally, the melting point of linear low-density polyethylene tends to decrease with decreasing density. When expanded beads are produced using linear low-density polyethylene having such a low density, the state of the resin changes significantly when heat is applied to the resin, and the resin tends to soften excessively; possibly because of this, the expanded beads immediately after expanding tend to shrink excessively during expanding of the resin particles, making it difficult to produce good expanded beads in some cases. Even if expanded beads can be obtained, from the same viewpoint, it is difficult to produce expanded beads excellent in in-mold moldability because the molded article immediately after molding becomes excessively prone to sinking during in-mold molding of the expanded beads.

Though not clear, the reason for the improved in-mold moldability of the expanded beads in the third embodiment of the present invention can be considered as follows. Linear low-density polyethylene containing a propylene component as a copolymerization component used for the expanded beads in the third embodiment of the present invention has a low density while having a relatively high melting point and a tendency to change its physical properties slowly when softened. For this reason, it is considered that expanded beads having excellent in-mold moldability can be obtained by using linear low-density polyethylene containing a propylene component as a copolymerization component even when the linear low-density polyethylene has a low density.

In the third embodiment of the present invention, linear low-density polyethylene having a low density and containing at least one selected from the group consisting of a butene component, a hexene component, and an octene component, preferably at least one selected from the group consisting of a butene component and a hexene component, as a copolymerization component can be used to produce resin particles excellent in expandability and expanded beads excellent in in-mold moldability.

From such a viewpoint, the content of the propylene component (content of the component derived from propylene) in the linear low-density polyethylene is preferably 0.5 mol% or more and 3 mol% or less. From the viewpoint of easily producing a molded article having a small compression set, the content of the component derived from propylene is preferably 0.6 mol% or more, more preferably 0.8 mol% or more, still more preferably 1 mol% or more. On the other hand, from the viewpoint of enhancing in-mold moldability of expanded beads and from the viewpoint of easily producing a molded article having the desired mechanical properties, the content of the component derived from propylene is more preferably 2 mol% or less.

From the same viewpoint, the ratio of the content of the propylene component to the total content of the propylene component and the $\alpha$-olefin component ($\alpha$1) (content of component ($\alpha$1) derived from at least one $\alpha$-olefin selected from the group consisting of a butene component, a hexene component, and an octene component) in the linear low-density polyethylene is preferably 0.1 or more, more preferably 0.2 or more. On the other hand, the ratio of the content of the propylene component to the total content of the propylene component and the $\alpha$-olefin component ($\alpha$1) is preferably 0.6 or less, more preferably 0.5 or less, still more preferably 0.4 or less.

Note that the contents above are contents when the total of the component derived from ethylene and the component derived from an $\alpha$-olefin having 3 or more carbon atoms (such as propylene, butene, hexene, and octene) is set to 100% by mass. From the viewpoint of easily producing linear low-density polyethylene with the desired physical properties, the total content of the propylene component and the $\alpha$-olefin component ($\alpha$1) in the linear low-density polyethylene is preferably 1 mol% or more and 10 mol% or less, more preferably 3 mol% or more and 8 mol% or less.

In the case where the linear low-density polyethylene contains a plurality of linear low-density polyethylene, the range of the content of the propylene component, the range of the ratio of the content of the propylene component to the total content of the propylene component and the $\alpha$-olefin component ($\alpha$1), and the range of the total content of the propylene component and the $\alpha$-olefin component ($\alpha$1) in the linear low-density polyethylene represent the range of the content of the propylene component, the range of the ratio of the content of the propylene component to the total content of the propylene component and the $\alpha$-olefin component ($\alpha$1), and the range of the total content of the propylene component and the $\alpha$-olefin component ($\alpha$1) in a plurality of linear low-density polyethylene in the linear low-density polyethylene as a whole.

The content of the component derived from $\alpha$-olefin in the linear low-density polyethylene can be determined, for example, by carbon-13 NMR spectroscopy ($^{13}$C-NMR) measurement, which will be described in the section of Examples.

The linear low-density polyethylene in the third embodiment preferably contains as its main component at least one selected from the group consisting of linear low-density polyethylene A1 containing a propylene component, a butene component and a hexene component as copolymerization components (comonomers), and linear low-density polyethylene A2 containing a propylene component and a butene component as copolymerization components (comonomers), more preferably contains as its main component the linear low-density polyethylene A1 containing a propylene component, a butene component, and a hexene component as the copolymerization component. In this case, the proportion of the total of the linear low-density polyethylene A1 in the third embodiment and the linear low-density polyethylene A2 in the third embodiment in the linear low-density polyethylene in the third embodiment is 50% by mass or more, preferably 60% by mass or more, more preferably 80% by mass or more, and still more preferably 90% by mass or more. In the linear low-density polyethylene in the third embodiment, the proportion of the total of the linear low-density polyethylene A1 in the third embodiment and the linear low-density polyethylene A2 in the third embodiment is 100% by mass or less.

From the viewpoint of more enhancing the in-mold moldability of the expanded beads, in the linear low-density polyethylene in the third embodiment, the proportion of the linear low-density polyethylene A1 in the third embodiment is 50% by mass or more, preferably 60% by mass or more, more preferably 80% by mass or more, and still more preferably 90% by mass or more. On the other hand, in the linear low-density polyethylene in the third embodiment, the proportion of the linear low-density polyethylene in the third embodiment A1 is 100% by mass or less.

In the case of using a linear low-density polyethylene A1 containing a propylene component, a butene component and a hexene component as the linear low-density polyethylene in the third embodiment, the content of the butene component (component derived from butene) in the linear low-density polyethylene in the third embodiment is preferably 0.5 mol% or more and 6 mol% or less, more preferably 1 mol% or more and 5 mol% or less, still more preferably 2 mol% or more and 4 mol% or less, from the viewpoint of stably forming resin particles excellent in expandability and from the viewpoint of stably producing expanded beads excellent in in-mold moldability. The content of the hexene component (component derived from hexene) in the linear low-density polyethylene in the third embodiment is preferably 0.2 mol% or more and 5 mol% or less, more preferably 0.5 mol% or more and 4 mol% or less, still more preferably 0.8 mol% or more and 3 mol% or less.

From the same viewpoint, in the case of using a linear low-density polyethylene A2 containing a propylene component and a butene component as the linear low-density polyethylene in the third embodiment, the content of the butene component in the linear low-density polyethylene A2 is preferably 2 mol% or more and 7 mol% or less, more preferably 3 mol% or more and 6 mol% or less.

In the case where the linear low-density polyethylene contains the linear low-density polyethylene A1 and/or the linear low-density polyethylene A2, the ratio of the content of the propylene component (component derived from propylene) to the content of the butene component (component derived from butene) [propylene component content (mol%)/butene component content (mol%)] in the linear low-density polyethylene A1 or the linear low-density polyethylene A2 is preferably 0.1 or more and 1 or less, more preferably 0.2 or more and 0.8 or less, still more preferably 0.3 or more and 0.6 or less, from the viewpoint of stably enhancing expandability of the resin particles and expandability of a second-stage expansion of the expanded beads and from the viewpoint of easily producing expanded beads capable of stably producing a molded article excellent in-mold moldability with the desired mechanical properties.

In the case where the linear low-density polyethylene contains the linear low-density polyethylene A1, the ratio of the content of the propylene component (component derived from propylene) to the content of the hexene component (component derived from hexene) [propylene component content (mol%)/hexene component content (mol%)] in the linear low-density polyethylene A1 in the third embodiment is preferably 0.5 or more and 2 or less, more preferably 0.6 or more and 1.5 or less, still more preferably 0.8 or more and 1.4 or less.

The melt flow rate of the linear low-density polyethylene in the third embodiment as measured under conditions of a temperature of 190°C and a load of 2.16 kg is preferably 0.1 g/10 min or more and 2.0 g/10 min or less. When the melt flow rate of the linear low-density polyethylene in the third embodiment falls within the above range, the in-mold moldability of the expanded beads can be enhanced.

The melt flow rate of the linear low-density polyethylene in the third embodiment is more preferably 0.3 g/10 min or more, still more preferably 0.5 g/10 min or more, and even more preferably 0.7 g/10 min or more. The melt flow rate of the linear low-density polyethylene in the third embodiment is more preferably 1.8 g/10 min or less, still more preferably 1.5 g/10 min or less, and even more preferably 1.4 g/10 min or less.

Note that the melt flow rate of the linear low-density polyethylene is a value measured under conditions of a temperature of 190°C and a load of 2.16 kg. More specifically, the melt flow rate can be measured according to JIS K 7210-1:2014 by the method described in the section of Examples.

The linear low-density polyethylene in the third embodiment has a melting point of 120°C or higher and 130°C or lower. As described above, the linear low-density polyethylene used in the third embodiment of the present invention contains, as copolymerization components, a propylene component and at least one $\alpha$-olefin component ($\alpha$1) selected from the group consisting of a butene component, a hexene component, and an octene component. Such linear low-density polyethylene tends to have a low density while having a relatively high melting point. For this reason, the linear low-density polyethylene has a low density and a relatively high melting point satisfying the range of the melting point. Therefore, it is considered that expanded beads having excellent in-mold moldability can be obtained even when the linear low-density polyethylene has a low density.

From such a viewpoint, the melting point of the linear low-density polyethylene in the third embodiment is more preferably 122°C or higher, still more preferably 123°C or higher. On the other hand, the melting point of the linear low-density polyethylene in the third embodiment is, from the viewpoint of enhancing the in-mold moldability of the expanded beads under a low molding pressure condition, preferably 128°C or lower, more preferably 126°C or lower.

The melting point of the linear low-density polyethylene is measured based on JIS K 7121:2012, using test pieces of the linear low-density polyethylene, resin particles, or expanded beads. Specifically, for the measurement, the method described in the section of Examples is referred to.

The density of the linear low-density polyethylene in the third embodiment is preferably 920 kg/m³ or less, and from the viewpoint of facilitating efficient production of expanded beads having a low bulk density and from the viewpoint of easily producing a molded article of expanded beads having a small compression set, preferably 919 kg/m³ or less, more preferably 918 kg/m³ or less, still more preferably 917 kg/m³ or less. On the other hand, the density of the linear low-density polyethylene in the third embodiment is preferably 910 kg/m³ or more, and from the viewpoint of easily enhancing the in-mold moldability of the expanded beads, more preferably 912 kg/m³ or more, and still more preferably 914 kg/m³ or more.

The density of the linear low-density polyethylene is measured by Method A (immersion method) described in JIS K 7112:1999. In the case of measuring the density of the resin from the expanded beads, the expanded beads subjected to the defoaming treatment as a measurement samples can be used for measurement of the above density to measure the density of the resin.

The linear low-density polyethylene in the third embodiment preferably has a density $\rho$ (kg/m³) and a melting temperature Tm (°C) satisfying the following expression (1), from the viewpoint of stably enhancing expandability of the resin particles and expandability of a second-stage expansion of the expanded beads and from the viewpoint of easily producing expanded beads excellent in in-mold moldability and capable of stably producing a molded article having a small compression set.

$$\rho < 1.14 \times \text{Tm} + 779 \qquad (1)$$

The linear low-density polyethylene satisfying the expression (1) tends to have a low density while having a relatively high melting point. Therefore, it can be preferably used as the linear low-density polyethylene constituting the expanded beads in the third embodiment of the present invention.

The difference [(1.14 $\times$ Tm + 779) - $\rho$] between the right side (1.14 $\times$ Tm + 779) of expression (1) and the left side

(density $\rho$) of expression (1) is more preferably 1 or more, still more preferably 2 or more, even more preferably 3 or more, further more preferably 4 or more. The upper limit is not limited, and is preferably 10 or less. The use of linear low-density polyethylene satisfying the above range may stably give expanded beads excellent in in-mold moldability and a molded article having a small compression set. Note that, in general linear low-density polyethylene (linear low-density polyethylene that does not contain propylene components as copolymerization components), the density may generally range from 910 kg/m$^3$ or more and 940 kg/m$^3$ or less, and the melting point may generally range from 110°C or more and to 130°C or less. However, in the general linear low-density polyethylene, the melting point tends to decrease as the density decreases, and therefore it is considered to be difficult to achieve both a low density and a high melting point as in the linear low-density polyethylene (linear low-density polyethylene containing a propylene component as a copolymerization component) of the present invention. Therefore, it is considered that the general linear low-density polyethylene does not satisfy the relationship of expression (1).

From the viewpoint of easily producing expanded beads having desired physical properties, the heat of fusion of the linear low-density polyethylene in the third embodiment is preferably 60 J/g or more, more preferably 70 J/g or more, still more preferably 75 J/g or more. Also, from the same viewpoint, the heat of fusion of the linear low-density polyethylene in the third embodiment is preferably 105 J/g or less, more preferably 100 J/g or less, still more preferably 95 J/g or less, particularly preferably 90 J/g or less.

The heat of fusion of the linear low-density polyethylene can be determined from the DSC curve obtained by carrying out differential scanning calorimetry (DSC) according to JIS K 7122:2012 using a test piece of the linear low-density polyethylene. Specifically, for the measurement, the method described in the section of Examples is referred to.

The linear low-density polyethylene in the third embodiment preferably has a biomass degree of 40% or more as measured according to ASTM D 6866. When the biomass degree falls within the above range, the use of fossil resources can be suppressed in the production of the molded article, and the amount of carbon dioxide emitted in the life cycle of the molded article can also be reduced.

From the above viewpoint, the biomass degree of the linear low-density polyethylene as measured according to ASTM D 6866 is more preferably 50% or more, still more preferably 60% or more, even more preferably 70% or more, further more preferably 80% or more. The upper limit is not limited, and the biomass degree of the linear low-density polyethylene in the third embodiment as measured according to ASTM D 6866 may be 100% or less. From the viewpoint of easily enhancing the in-mold moldability of the expanded beads, however, the biomass degree of the linear low-density polyethylene in the third embodiment as measured according to ASTM D 6866 is preferably 95% or less, more preferably 90% or less. The biomass degree is measured according to ASTM D 6866 and means the proportion of naturally-occurring components in the linear low-density polyethylene. In addition, the biomass degree is a value determined by measuring the concentration of radiocarbon $^{14}C$ against the linear low-density polyethylene.

<Properties and composition of expanded bead (first embodiment and second embodiment)>

As described above, the expanded bead in the first embodiment of the present invention contains, as the base resin, linear low-density polyethylene having a biomass degree of 40% or more as measured according to ASTM D 6866, and preferably has the following properties. As described above, the expanded bead in the second embodiment of the present invention contains, as the base resin, linear low-density polyethylene containing a butene component and a hexene component as copolymerization components, and preferably has the following properties.

The expanded beads in the first embodiment and the expanded beads in the second embodiment of the present invention are preferably expanded beads having a bulk density of 10 kg/m$^3$ or more and 300 kg/m$^3$ or less. The bulk density of the expanded beads is, from the viewpoint of enhancing the mechanical properties of the resultant molded articles, preferably 10 kg/m$^3$ or more, more preferably 13 kg/m$^3$ or more, still more preferably 15 kg/m$^3$ or more. On the other hand, from the viewpoint of producing a molded article having a low apparent density, the bulk density of the expanded beads is preferably 300 kg/m$^3$ or less, more preferably 240 kg/m$^3$ or less, still more preferably 200 kg/m$^3$ or less, even more preferably 100 kg/m$^3$ or less, further more preferably 80 kg/m$^3$ or less, and even further preferably 60 kg/m$^3$ or less.

As described later, the resultant expanded beads in the present invention can also be subjected to a pressurization treatment, followed by second-stage expansion, in which the expanded beads are heated with steam or the like to further cause expansion, to give expanded beads with an even higher expansion ratio (lower bulk density). From the viewpoint of producing a molded article having a low apparent density, it is preferable to carry out second-stage expansion.

In the case of carrying out second-stage expansion, the bulk density of the expanded beads after the first-stage expansion (before the second-stage expansion) is, from the viewpoint of stably producing expanded beads having a desired cell structure, preferably 60 kg/m$^3$ or more, more preferably 70 kg/m$^3$ or more, still more preferably 80 kg/m$^3$ or more. On the other hand, in the case of carrying out second-stage expansion, the bulk density of the expanded beads after the first-stage expansion (before the second-stage expansion) is, from the viewpoint of stably producing expanded beads having a low apparent density, preferably 240 kg/m$^3$ or less, more preferably 200 kg/m$^3$ or less, still more preferably 180 kg/m$^3$ or less, even more preferably 160 kg/m$^3$ or less.

Note that the bulk density can be measured according to the method described in the section of Examples.

The volume percentage of closed cells in the expanded beads in the first embodiment and the expanded beads in the second embodiment of the present invention is preferably 80% or more. When the volume percentage of closed cells in the expanded beads falls within the above range, the in-mold moldability of the expanded beads can be enhanced. The volume percentage of closed cells in the expanded beads is more preferably 85% or more, still more preferably 88% or more, even more preferably 90% or more. Although the upper limit of the volume percentage of closed cells in the expanded beads is not limited, it is preferably 99% or less, more preferably 98% or less, still more preferably 97% or less.

Note that the volume percentage of closed cells can be measured according to the method described in the section of Examples.

The average cell diameter of the expanded beads in the first embodiment and the expanded beads in the second embodiment of the present invention is preferably 60 μm or more and 200 μm or less. When the average cell diameter of the expanded beads falls within the above range, the in-mold moldability of the expanded beads can be stably enhanced. The average cell diameter of the expanded beads is more preferably 70 μm or more, still more preferably 80 μm or more, even more preferably 100 μm or more. The average cell diameter of the expanded beads is preferably 180 μm or less, still more preferably 160 μm or less, even more preferably 140 μm or less.

In the case of carrying out second-stage expansion, the average cell diameter of the expanded beads after the first-stage expansion (before the second-stage expansion) is preferably 50 μm or more, more preferably 60 μm or more, still more preferably 70 μm or more. In the case of carrying out second-stage expansion, the average cell diameter of the expanded beads after the first-stage expansion (before the second-stage expansion) is preferably 120 μm or less, more preferably 110 μm or less, still more preferably 100 μm or less.

The average cell diameter can be determined by drawing plural line segments each running from the outermost surface of an expanded bead to the outermost surface on the opposite side thereof passing through the center part, on an enlarged picture of a cross section of an expanded bead divided into two, followed by dividing the number of the cells crossing each line segment by the total length of the line segment. Specifically, for the measurement, the method described in the section of Examples is referred to.

The average cell diameter of the expanded beads can be controlled to fall within a desired range, for example, by controlling the kind and the amount of the cell controlling agent to be added to the resin particles or by controlling the expanding temperature or the inner pressure of the pressure resistant vessel in expanding the resin particles.

The expanded bead in the first embodiment of the present invention has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less. The expanded bead in the second embodiment of the present invention has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 30 J/g or more and 50 J/g or less; and a ratio of the heat of fusion at the high-temperature peak to the total heat of fusion of the expanded bead is 0.3 or more and 0.7 or less.

The DSC curve is a DSC curve drawn in differential scanning calorimetry (DSC) according to JIS K 7122:2012. Specifically, using a differential scanning calorimeter, 1 to 3 mg of expanded beads are heated from 23°C to 200°C at a heating rate of 10°C/min to draw the DSC curve.

As described above, the expanded beads in the first embodiment and the expanded beads in the second embodiment of the present invention have a melting peak intrinsic to the linear low-density polyethylene (intrinsic peak) and at least one melting peak on a higher temperature side than the intrinsic peak (high-temperature peak) which appear on the DSC curve drawn by measurement of the expanded beads.

The description is given in more detail below.

The DSC curve means a DSC curve (DSC curve in the first heating) drawn by heating the expanded beads according to the above-mentioned measurement method. The melting peak intrinsic to the linear low-density polyethylene (intrinsic peak) refers to a melting peak that appears by melting of crystals that the linear low-density polyethylene constituting the expanded beads generally has.

On the other hand, the melting peaks (high-temperature peaks) on the high-temperature side then the intrinsic peaks are melting peaks appearing on the higher temperature side than the intrinsic peaks on the DSC curve in the first heating. In the case where the high-temperature peaks appear, it is presumed that secondary crystals are present in the resin. On the DSC curve (DSC curve in the second heating) drawn by heating the expanded beads from 23°C to 200°C at a heating rate of 10°C/min (first heating), then cooling them from 200°C to 23°C at a cooling rate of 10°C/min, and thereafter again heating them from 23°C to 200°C at a heating rate of 10°C/min (second heating), only a melting peak appears by melting of crystal that the linear low-density polyethylene constituting the expanded beads generally has. The intrinsic peak appears on the DSC curve in the first heating and also on the DSC curve in the second heating, and the peak temperature may somewhat differ between the first time and the second time, but in general, the difference is less than 5°C. With that, it can be confirmed that which peak is the intrinsic peak.

Preferably, on the DSC curve drawn in the second heating in heating the expanded beads in the first embodiment and the expanded beads in the second embodiment of the present invention from 23°C to 200°C at a heating rate of 10°C/min, then cooling them from 200°C to 23°C at a cooling rate of 10°C/min, and thereafter again heating them from 23°C to 200°C at a heating rate of 10°C/min, the expanded beads are the expanded beads where only a melting peak intrinsic to the linear low-density polyethylene (intrinsic peak) appears on the DSC curve drawn in the second heating.

The total heat of fusion of the expanded beads in the first embodiment and the expanded beads in the second embodiment of the present invention is the sum of the heat of fusion of all the melting peaks (endothermic peaks) appearing on the DSC curve. The total heat of fusion of the expanded beads in the first embodiment and the expanded beads in the second embodiment of the present invention is 70 J/g or more and 100 J/g or less. When the total heat of fusion of the expanded beads falls within the above range, expanded beads excellent in expandability of a second-stage expansion and in-mold moldability can be obtained, and a molded article excellent in strength can also be obtained.

The total heat of fusion of the expanded beads in the first embodiment and the expanded beads in the second embodiment of the present invention is, from the viewpoint of improving the strength of the resultant molded article, preferably 72 J/g or more, more preferably 75 J/g or more, still more preferably 78 J/g or more. Also, the total heat of fusion of the expanded beads in the first embodiment and in the second embodiment of the present invention is, from the viewpoint of enhancing expandability of the second-stage expansion and in-mold moldability of the expanded beads, preferably 95 J/g or less, more preferably 90 J/g or less, still more preferably 85 J/g or less.

The total heat of fusion of the expanded beads can be determined from the DSC curve obtained by carrying out differential scanning calorimetry (DSC) according to JIS K 7122:2012 using a test piece of the expanded beads thereof. Specifically, for condition control of the test piece, "(2) a case of measuring a melting temperature after predetermined heat treatment" is first employed, in which a test piece is heated from 23°C to 200°C at a heating rate of 10°C/min, then cooled them from 200°C to 23°C at a rate of 10°C/min after reaching 200°C, and again heated them from 23°C to 200°C at a rate of 10°C/min to draw a DSC curve (DSC curve at the time of second heating). The point at a temperature of 80°C on the obtained DSC curve at the time of second heating is defined as $\alpha$, and the point on the DSC curve corresponding to the end temperature of melting is defined as $\beta$. The area of the part surrounded by the DSC curve at an interval between the point $\alpha$ and the point $\beta$ and the line segment ($\alpha$-$\beta$) was measured, and the heat of fusion of the expanded beads can be calculated from the area.

The heat of fusion at the high-temperature peak of the expanded beads in the first embodiment and the expanded beads in the second embodiment of the present invention is at least 10 J/g or more and 50 J/g or less, preferably 30 J/g or more and 50 J/g or less. When the heat of fusion at the high-temperature peak of the expanded beads falls within the above range, the in-mold moldability of the expanded beads can be enhanced even in the case of expanded beads having a low bulk density, and the expanded beads can be obtained in a wide molding pressure range capable of in-mold molding. As a result, a good molded article can be obtained over a wide density range.

The heat of fusion at the high-temperature peak of the expanded beads in the first embodiment and the expanded beads in the second embodiment of the present invention is preferably 15 J/g or more, more preferably 20 J/g or more, still more preferably 30 J/g or more, even more preferably 32 J/g, further more preferably 34 J/g from the viewpoint of suppressing sink marks of the molded article immediately after molding and enhancing in-mold moldability of the expanded beads, even in the case of expanded beads having a lower bulk density or from the viewpoint of stably suppressing shrinkage of second-stage expanded beads upon second-stage expansion of the expanded beads. The heat of fusion at the high-temperature peak of the expanded beads in the first embodiment and the expanded beads in the second embodiment of the present invention is 50 J/g or less, preferably 45 J/g or less, and more preferably 40 J/g or less, from the viewpoint of improving the fusion-bonding properties of the expanded beads under low molding pressure conditions, enhancing the in-mold moldability of the expanded beads, and from the viewpoint of easily producing expanded beads having a lower bulk density upon second-stage expansion of the expanded beads.

The heat of fusion at the high-temperature peak can be determined by heat flux differential scanning calorimetry according to JIS K 7122:2012 using a test piece of the expanded beads thereof. Specifically, the heat of fusion can be determined from the DSC curve drawn by heating the expanded beads from 23°C to 200°C at a heating rate of 10°C/min (DSC curve in the first heating), and more specifically, can be measured by the method described in the section of Examples.

The ratio of the heat of fusion at the high-temperature peak to the total heat of fusion of the expanded beads in the first embodiment and the expanded beads in the second embodiment of the present invention [heat of fusion at the high-temperature peak/total heat of fusion] is preferably 0.2 or more and 0.7 or less, more preferably 0.3 or more and 0.7 or less. When each heat of fusion mentioned above falls within the above range as well as the ratio mentioned above, expanded beads have excellent in-mold moldability and a wide molding pressure range capable of in-mold molding can be obtained over a wide density range. In addition, expanded beads with good expandability of the second-stage expansion can be obtained.

The ratio of the heat of fusion at the high-temperature peak to the total heat of fusion of the expanded beads in the first embodiment and the expanded beads in the second embodiment of the present invention is preferably 0.3 or more, more preferably 0.35 or more, still more preferably 0.40 or more, even more preferably 0.42 or more, further more preferably 0.45 or more, from the viewpoint of suppressing sink marks of the molded article immediately after molding and enhancing in-mold moldability of the expanded beads even in the case of expanded beads having a lower bulk density or from the viewpoint of stably suppressing shrinkage of second-stage expanded beads upon second-stage expansion of the expanded beads. The ratio of the heat of fusion at the high-temperature peak to the total heat of fusion of the expanded beads in the first embodiment and the expanded beads in the second embodiment of the present invention is preferably 0.6 or less, more preferably 0.55 or less, from the viewpoint of improving the fusion-bonding properties of the expanded beads under low molding pressure conditions, enhancing the in-mold moldability of the expanded beads, and from the viewpoint of easily producing expanded beads having a lower bulk density upon second-stage expansion of the expanded beads.

Note that the ratio of the heat of fusion at the high-temperature peak to the total heat of fusion can be calculated from the total heat of fusion and the heat of fusion at the high-temperature peak.

The expanded beads in the first embodiment and the expanded beads in the second embodiment of the present invention may contain a polymer such as a resin or an elastomer other than the linear low-density polyethylene within a range not detracting from the advantageous effects of the present invention. In this case, the content of the other polymer than the linear low-density polyethylene in the expanded beads is preferably 40 parts by mass or less, more preferably 30 parts by mass or less, still more preferably 20 parts by mass or less, even more preferably 10 part by mass or less, particularly preferably 5 parts by mass or less, based on 100 parts by mass of the linear low-density polyethylene.

<Properties and composition of expanded bead (third embodiment)>

As described above, the expanded beads in the third embodiment of the present invention have a specific density and melting point and contain, as a base resin, a linear low-density polyethylene containing, as copolymerization components, a propylene component and at least one $\alpha$-olefin component ($\alpha$1) selected from the group consisting of a butene component, a hexene component and an octene component, and preferably have the following properties.

The expanded beads in the third embodiment of the present invention are preferably expanded beads having a bulk density of 10 kg/m$^3$ or more and 300 kg/m$^3$ or less. The bulk density of expanded beads in the third embodiment is, from the viewpoint of enhancing the mechanical properties of the resultant molded articles, preferably 10 kg/m$^3$ or more, more preferably 13 kg/m$^3$ or more, still more preferably 15 kg/m$^3$ or more. On the other hand, from the viewpoint of producing a molded article having a low density, the bulk density of the expanded beads in the third embodiment is preferably 300 kg/m$^3$ or less, more preferably 240 kg/m$^3$ or less, still more preferably 200 kg/m$^3$ or less, even more preferably 100 kg/m$^3$ or less, further more preferably 80 kg/m$^3$ or less, and even further preferably 60 kg/m$^3$ or less.

As described later, the resultant expanded beads in the present invention can also be subjected to a pressurization treatment, followed by second-stage expansion, in which the expanded beads are heated with steam or the like to further cause expansion, to give expanded beads with an even higher expansion ratio (lower bulk density). From the viewpoint of producing a molded article having a low density, it is preferable to carry out second-stage expansion.

In the case of carrying out second-stage expansion, the bulk density of the expanded beads after the first-stage expansion (before the second-stage expansion) is, from the viewpoint of stably producing expanded beads having a desired cell structure, preferably 60 kg/m$^3$ or more, more preferably 70 kg/m$^3$ or more, still more preferably 80 kg/m$^3$ or more. On the other hand, in the case of carrying out second-stage expansion, the bulk density of the expanded beads after the first-stage expansion (before the second-stage expansion) is, from the viewpoint of stably producing expanded beads having a low density, preferably 240 kg/m$^3$ or less, more preferably 200 kg/m$^3$ or less, still more preferably 180 kg/m$^3$ or less, even more preferably 160 kg/m$^3$ or less.

Note that the bulk density can be measured according to the method described in the section of Examples.

The volume percentage of closed cells in the expanded beads in the third embodiment of the present invention is preferably 80% or more. When the volume percentage of closed cells in the expanded beads falls within the above range, the in-mold moldability of the expanded beads can be enhanced. The volume percentage of closed cells in the expanded beads in the third embodiment of the present invention is more preferably 85% or more, still more preferably 88% or more, even more preferably 90% or more. Although the upper limit of the volume percentage of closed cells in the expanded beads in the third embodiment of the present invention is not limited, it is more preferably 99% or less, still more preferably 98% or less, even more preferably 97% or less.

Note that the volume percentage of closed cells can be measured according to the method described in the section of Examples.

The average cell diameter of the expanded beads in the third embodiment of the present invention is preferably 60 $\mu$m or more and 200 $\mu$m or less. When the average cell diameter of the expanded beads falls within the above range, the in-mold moldability of the expanded beads can be stably enhanced. The average cell diameter of the expanded beads in the third embodiment of the present invention is more preferably 70 $\mu$m or more, still more preferably 80 $\mu$m or more, even more preferably 100 $\mu$m or more. The average cell diameter of the expanded beads in the third embodiment of the present invention is more preferably 180 $\mu$m or less, still more preferably 160 $\mu$m or less, even more preferably 140 $\mu$m or less.

In the case of carrying out second-stage expansion, the average cell diameter of the expanded beads after the first-stage expansion (before the second-stage expansion) is preferably 50 $\mu$m or more, more preferably 60 $\mu$m or more, still more preferably 70 $\mu$m or more. In the case of carrying out second-stage expansion, the average cell diameter of the expanded beads after the first-stage expansion (before the second-stage expansion) is preferably 120 $\mu$m or less, more preferably 110 $\mu$m or less, still more preferably 100 $\mu$m or less.

The average cell diameter can be determined by drawing plural line segments each running from the outermost surface of an expanded bead to the outermost surface on the opposite side thereof passing through the center part, on an enlarged picture of a cross section of an expanded bead divided into two, followed by dividing the number of the cells crossing each line segment by the total length of the line segment. Specifically, the average cell diameter can be measured according to the method described in the section of Examples.

The average cell diameter of the expanded beads can be controlled to fall within a desired range, for example, by controlling the kind and the amount of the cell controlling agent to be added to the resin particles or by controlling the expanding temperature or the inner pressure of the pressure resistant vessel in expanding the resin particles.

The expanded bead in the third embodiment of the present invention has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; the total heat of fusion of the expanded bead is preferably 70 J/g or more and 100 J/g or less; and the heat of fusion at the high-temperature peak is preferably 10 J/g or more and 50 J/g or less.

The DSC curve is a DSC curve drawn in differential scanning calorimetry (DSC) according to JIS K 7122: 2012. Specifically, using a differential scanning calorimeter, 1 to 3 mg of expanded beads are heated from 23°C to 200°C at a heating rate of 10°C/min to draw the DSC curve.

As described above, the expanded beads in the third embodiment of the present invention have a melting peak intrinsic to the linear low-density polyethylene (intrinsic peak) and at least one melting peak on a higher temperature side than the intrinsic peak (high-temperature peak) which appear on the DSC curve drawn by measurement of the expanded beads.

The description is given in more detail below.

The DSC curve means a DSC curve (DSC curve in the first heating) drawn by heating the expanded beads according to the above-mentioned measurement method. The melting peak intrinsic to the linear low-density polyethylene (intrinsic peak) refers to a melting peak that appears with melting of crystals that the linear low-density polyethylene constituting the expanded beads generally has.

On the other hand, the melting peaks (high-temperature peaks) on the high-temperature side then the intrinsic peaks are melting peaks appearing on the higher temperature side than the intrinsic peaks on the DSC curve in the first heating. In the case where the high-temperature peaks appear, it is presumed that secondary crystals are present in the resin. On the DSC curve (DSC curve on the second heating) drawn by heating the expanded beads from 23°C to 200°C at a heating rate of 10°C/min (first heating), then cooling them from 200°C to 23°C at a cooling rate of 10°C/min, and thereafter again heating them from 23°C to 200°C at a heating rate of 10°C/min (second heating), only a melting peak appears by melting of crystal that the linear low-density polyethylene constituting the expanded beads generally has. The intrinsic peak appears on the DSC curve in the first heating and also on the DSC curve in the second heating, and the peak temperature may somewhat differ between the first time and the second time, but in general, the difference is less than 5°C. With that, it can be confirmed that which peak is the intrinsic peak.

Preferably, on the DSC curve drawn in the second heating in heating the expanded beads in the third embodiment of the present invention from 23°C to 200°C at a heating rate of 10°C/min, then cooling them from 200°C to 23°C at a cooling rate of 10°C/min, and thereafter again heating them from 23°C to 200°C at a heating rate of 10°C/min, the expanded beads are the expanded beads where only a melting peak intrinsic to the linear low-density polyethylene (intrinsic peak) appears on the DSC curve drawn in the second heating.

The total heat of fusion of the expanded beads in the third embodiment of the present invention is the sum of the heat of fusion of all the melting peaks (endothermic peaks) appearing on the DSC curve. The total heat of fusion of the expanded beads in the third embodiment of the present invention is preferably 70 J/g or more and 100 J/g or less. When the total heat of fusion of the expanded beads falls within the above range, expanded beads excellent in expandability of a second-stage expansion and in-mold moldability can be stably obtained, and a molded article excellent in strength can also be easily obtained.

The total heat of fusion of the expanded beads in the third embodiment of the present invention is, from the viewpoint of improving the strength of the resultant molded article, more preferably 72 J/g or more, still more preferably 75 J/g or more, even more preferably 78 J/g or more. Also, the total heat of fusion of the expanded beads in the third embodiment of the present invention is, from the viewpoint of enhancing expandability of the second-stage expansion and in-mold moldability of the expanded beads, more preferably 95 J/g or less, still more preferably 90 J/g or less, even more preferably 85 J/g or less.

The total heat of fusion of the expanded beads can be determined from the DSC curve obtained by carrying out differential scanning calorimetry (DSC) according to JIS K 7122:2012 using a test piece of the expanded beads thereof. Specifically, for condition control of the test piece, "(2) a case of measuring a melting temperature after predetermined heat treatment" is first employed, in which a test piece is heated from 23°C to 200°C at a heating rate of 10°C/min, then cooled them from 200°C to 23°C at a rate of 10°C/min after reaching 200°C, and again heated them from 23°C to 200°C at a rate of 10°C/min to draw a DSC curve (DSC curve at the time of second heating). The point at a temperature of 80°C on the obtained DSC curve at the time of second heating is defined as $\alpha$, and the point on the DSC curve corresponding to the end temperature of melting is defined as $\beta$. The area of the part surrounded by the DSC curve at an interval between the point $\alpha$ and the point $\beta$ and the line segment $(\alpha\text{-}\beta)$ was measured, and the heat of fusion of the expanded beads can be calculated from the area.

The heat of fusion at the high-temperature peak of the expanded beads in the third embodiment of the present invention is preferably 10 J/g or more and 50 J/g or less. When the heat of fusion at the high-temperature peak of the expanded beads falls within the above range, the in-mold moldability of the expanded beads can be enhanced even in the case of expanded beads having a low bulk density, and the expanded beads can be obtained in a wide molding pressure range capable of in-mold molding. As a result, a good molded article can be obtained over a wide density range.

The heat of fusion at the high-temperature peak of the expanded beads in the third embodiment of the present invention is more preferably 15 J/g or more, still more preferably 20 J/g or more, even more preferably 30 J/g or more, further more preferably 32 J/g or more, particularly preferably 34 J/g or more, from the viewpoint of suppressing sink marks of the molded article immediately after molding and enhancing in-mold moldability of the expanded beads, even in the case of expanded beads having a lower bulk density or from the viewpoint of stably suppressing shrinkage of second-stage expanded beads upon second-stage expansion of the expanded beads. The heat of fusion at the high-temperature peak of the expanded beads in the third embodiment of the present invention is preferably 50 J/g or less, more preferably 45 J/g or less, still more preferably 42 J/g or less, from the viewpoint of improving the fusion-bonding properties of the expanded beads under low molding pressure conditions, enhancing the in-mold moldability of the expanded beads, and easily producing expanded beads having a lower bulk density upon second-stage expansion of the expanded beads.

The heat of fusion at the high-temperature peak can be determined by heat flux differential scanning calorimetry according to JIS K 7122:2012 using a test piece of the expanded beads thereof. Specifically, the heat of fusion can be determined from the DSC curve drawn by heating the expanded beads from 23°C to 200°C at a heating rate of 10°C/min (DSC curve in the first heating), and more specifically, can be measured by the method described in the section of Examples.

The ratio of the heat of fusion at the high-temperature peak to the total heat of fusion of the expanded beads in the third embodiment of the present invention [heat of fusion at the high-temperature peak/total heat of fusion] is preferably 0.2 or more and 0.7 or less. When each heat of fusion mentioned above falls within the range as well as the ratio mentioned above, expanded beads have excellent in-mold moldability and a wide molding pressure range capable of in-mold molding can be obtained over a wide density range. In addition, expanded beads with good expandability of a second-stage expansion can be obtained.

The ratio of the heat of fusion at the high-temperature peak to the total heat of fusion of the expanded beads in the third embodiment of the present invention is more preferably 0.3 or more, still more preferably 0.35 or more, even more preferably 0.40 or more, particularly preferably 0.42 or more, from the viewpoint of suppressing sink marks of the molded article immediately after molding and enhancing in-mold moldability of the expanded beads even in the case of expanded beads having a lower bulk density or from the viewpoint of stably suppressing shrinkage of second-stage expanded beads upon second-stage expansion of the expanded beads. In addition, the ratio of the heat of fusion at the high-temperature peak to the total heat of fusion of the expanded beads in the third embodiment of the present invention is more preferably 0.6 or less, still more preferably 0.55 or less, even more preferably 0.52 or less, from the viewpoint of improving the fusion-bonding properties of the expanded beads under low molding pressure conditions, enhancing the in-mold moldability of the expanded beads, and easily producing expanded beads having a lower bulk density upon second-stage expansion of the expanded beads.

Note that the ratio of the heat of fusion at the high-temperature peak to the total heat of fusion can be calculated from the total heat of fusion and the heat of fusion at the high-temperature peak.

The expanded beads in the third embodiment of the present invention may contain a polymer such as a resin or an elastomer other than the linear low-density polyethylene within a range capable of attaining the intended object of the present invention without detracting from the advantageous effects of the present invention. In the third embodiment of the present invention, the resin other than the linear low-density polyethylene also includes, for example, linear low-density polyethylene containing no propylene component as a copolymerization component and linear low-density polyethylene containing a component derived from an $\alpha$-olefin other than butene, hexene, and octene.

In this case, the content of the other polymer than the linear low-density polyethylene in the expanded beads in the third embodiment is preferably 40 parts by mass or less, more preferably 30 parts by mass or less, still more preferably 20 parts by mass or less, even more preferably 10 part by mass or less, particularly preferably 5 parts by mass, based on 100 parts by mass of the linear low-density polyethylene. The content of the polymer other than the linear low-density polyethylene in the expanded beads in the third embodiment may be 0 parts by mass or may not be contained.

<Properties and composition of expanded bead (first embodiment, second embodiment, and third embodiment)>

The expanded beads of the present invention preferably have a biomass degree of 40% or more as measured according to ASTM D 6866. When the biomass degree falls within the above range, the use of fossil resources can be suppressed in the production of the molded article, and the amount of carbon dioxide emitted in the life cycle of the molded article can also be reduced. From the above viewpoint, the biomass degree of the expanded beads of the present invention as measured according to ASTM D 6866 is more preferably 50% or more, still more preferably 60% or more, even more preferably 70% or more, particularly preferably 80% or more. The upper limit is not limited, and the biomass degree of the expanded beads of the present invention as measured according to ASTM D 6866 may be 100% or less. From the viewpoint of easily enhancing the in-mold moldability of the expanded beads, however, the biomass degree of the expanded beads of the present invention as measured according to ASTM D 6866 is preferably 95% or less, more preferably 90% or less. The biomass degree is measured according to ASTM D 6866 and means the proportion of naturally-occurring components in the expanded beads of the present invention. The biomass degree can be calculated by measuring the concentration of radiocarbon $^{14}C$ against the expanded beads or from the biomass degree of biomass-derived resin used to produce the expanded beads and the content proportion of biomass-derived resin in the expanded beads.

The melt flow rate of the expanded beads of the present invention measured under conditions of a temperature of 190°C and a load of 2.16 kg is preferably 0.1 g/10 min or more and 2.0 g/10 min or less. When the melt flow rate of the expanded beads falls within the above range, the in-mold moldability of the expanded beads can be enhanced.

The melt flow rate of the expanded beads of the present invention is more preferably 0.3 g/10 min or more, still more preferably 0.5 g/10 min or more, and even more preferably 0.7 g/10 min or more. The melt flow rate of the expanded beads of the present invention is more preferably 1.8 g/10 min or less, still more preferably 1.5 g/10 min or less, and even more preferably 1.4 g/10 min or less.

The melt flow rate of the expanded beads is a value measured under conditions of a temperature of 190°C and a load of 2.16 kg. More specifically, the melt flow rate can be measured according to JIS K 7210-1:2014 by the method described in the section of Examples. In the measurement, expanded beads that have been subjected to a defoaming treatment, if necessary, by a heat press or the like can be used as the measurement samples within a range that does not significantly impair the physical properties of the resin.

The expanded beads of the present invention are preferably non-crosslinked. The non-crosslinked structure makes it easier to recycle the expanded beads and reduce the environmental impact.

The term "non-crosslinked" as used herein means that the proportion of insoluble matter in the expanded beads determined by a thermal xylene extraction method is 5% by mass or less. From the viewpoint of facilitating the recycling of the expanded beads, the proportion of the insoluble matter in the expanded beads determined by the thermal xylene extraction method is preferably 3% by mass or less, most preferably 0.

The xylene insoluble matter in the expanded beads determined by thermal xylene extraction method can be measured as follows: first, about 1 g of precisely weighed expanded beads (exact mass thereof is represented by M (g)) are placed in a 150 mL round-bottomed flask, 100 mL of xylene is added thereto, and the mixture is heated with a mantle heater to reflux for 6 hours. Thereafter, the undissolved residue (insoluble matter) is separated by filtration through a 100-mesh wire gauze and dried in a vacuum dryer at 80°C for 8 hours or more. The mass m (g) of the dried product obtained by drying the residue is measured, and the proportion of m to M is expressed as a percentage, whereby the proportion of the xylene insoluble matter in the expanded beads can be determined.

An average mass per one bead (arithmetic average per one bead calculated by measuring the mass of 100 randomly chosen beads) of the expanded beads of the present invention is preferably 0.1 to 20 mg, more preferably 0.2 to 10 mg, still more preferably 0.3 to 5 mg, and even more preferably 0.4 to 2 mg. The average mass per one bead of the expanded beads can be calculated by measuring the mass of each of 100 randomly chosen expanded beads and then arithmetically averaging these masses.

Additives may be added to the expanded beads of the present invention within a range not detracting from the advantageous effects of the present invention. Examples of the additives include an antioxidant, a UV absorbent (ultraviolet absorbing agent), an antistatic agent, a flame retardant, a pigment, a dye and a cell controlling agent. For example, these additives can be contained in the expanded beads by adding them in a step of producing the resin particles.

Examples of the cell controlling agent usable herein include an inorganic powder and an organic powder. Examples of the inorganic powder include a metal borate such as zinc borate and magnesium borate. The organic powder includes a fluorine resin powder such as polytetrafluoroethylene (PTFE).

From the viewpoint of stably producing expanded beads having a desired bulk density and having a less fluctuating cell diameter, the blending amount of the cell controlling agent in the resin particles is preferably 50 ppm by mass or more and 5000 ppm by mass or less, more preferably 100 ppm by mass or more and 2000 ppm by mass or less, still more preferably 150 ppm by mass or more and 1500 ppm by mass or less.

From the viewpoint of easily controlling the average cell diameter of the expanded beads to fall within a desired range, a metal borate is preferably used as the cell controlling agent, and zinc borate is more preferred. In the case of using zinc borate, the arithmetic average particle diameter by number is preferably 0.5 μm or more and 10 μm or less, more preferably 1 μm or more and 8 μm or less.

The arithmetic average particle diameter by number of zinc borate is determined by converting the particle diameter distribution by volume as measured according to a laser diffraction scattering method to a particle diameter distribution by number, on the assumption that the shape of the particles is spherical, to give a particle diameter distribution by number, and arithmetically averaging the particle diameter data based on the particle diameter distribution by number. The particle diameter means a diameter of a hypothetical sphere having the same volume as that of the particle.

The expanded beads of the present invention can have a fusion-bonding layer on the surface thereof for enhancing the fusion-bonding properties between the expanded beads during in-mold molding. The fusion-bonding layer may be present on the entire surface or a part of the surface of the expanded beads. Examples of the resin constituting the fusion-bonding layer include a crystalline polyolefin resin having a melting point lower than the melting point of the linear low-density polyethylene constituting the expanded beads and an amorphous polyolefin resin having a softening point lower than the melting point of the linear low-density polyethylene constituting the expanded beads.

The method for forming the fusion-bonding layer on the surface of the expanded beads is not particularly limited, and examples thereof include a method for expanding resin particles having a fusion-bonding layer on the surface and a method for adhering a fusion-bonding layer on the surface of expanded beads after obtaining the expanded beads. When resin particles having a fusion-bonding layer on the surface thereof are expanded to give expanded beads, it is preferable to employ a method of disposing a fusion-bonding layer on the surfaces of resin particles by co-extruding a resin melt for forming the resin particle body and a resin melt for forming the fusion-bonding layer using an extruding device capable of co-extrusion when producing resin particles.

As described above, the expanded beads of the present invention can be suitably used as expanded beads for in-mold molding. In the case where the expanded beads of the present invention satisfy a specific relationship of the heat of fusion, the expanded beads are excellent in expandability at the time of second-stage expansion, and therefore, the expanded beads are also suitable as expanded beads for second-stage expansion.

On the other hand, in the case where the expanded beads of the present invention satisfy a specific relationship of the heat of fusion, the expanded beads have appropriate flexibility and recovery properties. Therefore, the expanded beads of the present invention can be suitably used, for example, as filler beads for cushioning materials. The filler beads are particulate fillers used to fill a bag to form a cushion material, and can be particularly suitably used as filler beads for a bead cushion.

<Production Method for Expanded Beads>

As described above, the method for producing the expanded beads in the first embodiment is not particularly limited as long as the expanded beads contains a linear low-density polyethylene as a base resin; the linear low-density polyethylene has a biomass degree of 40% or more as measured according to ASTM D 6866; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less.

As described above, the method for producing the expanded beads in the second embodiment is not particularly limited as long as the expanded beads contains a linear low-density polyethylene as a base resin; the linear low-density polyethylene is a linear low-density polyethylene containing a butene component and a hexene component as copolymerization components; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 30 J/g or more and 50 J/g or less; and a ratio of the heat of fusion at the high-temperature peak to the total heat of fusion of the expanded bead is 0.3 or more and 0.7 or less.

As described above, the method for producing the expanded beads in the third embodiment is not particularly limited as long as the expanded beads contains a linear low-density polyethylene as a base resin; the linear low-density polyethylene has a density of 920 kg/m³ or less; the linear low-density polyethylene has a melting point of 120°C or higher and 130°C or lower; and the linear low-density polyethylene comprises, as copolymerization components, a propylene component and at least one α-olefin component (α1) selected from the group consisting of a butene component, a hexene component, and an octene component. In the resin particles containing the linear low-density polyethylene as a base resin in the third embodiment, the linear low-density polyethylene has a density of 920 kg/m$^3$ or less; the linear low-density polyethylene has a melting point of 120°C or higher and 130°C or lower; and the linear low-density polyethylene is preferably resin particles containing, as copolymerization components, a propylene component and at least one α-olefin component (α1) selected from the group consisting of a butene component, a hexene component, and an octene component.

The expanded beads can be produced, for example, by impregnating resin particles containing the linear low-density polyethylene as a base resin with a blowing agent and expanding the resin particles containing the blowing agent. One preferred example of the production method is described below.

A preferred method for producing the expanded beads of the present invention is a method for producing expanded beads by expanding resin particles containing the linear low-density polyethylene as a base resin, the method including discharging resin particles that contain a blowing agent as dispersed in an aqueous medium in a vessel from the vessel to under a pressure atmosphere lower than the pressure inside the vessel along with the aqueous medium to expand the resin particles.

More specifically, the production method includes a dispersion step of dispersing the resin particles linear low-density polyethylene as a base resin in an aqueous medium in a vessel, a blowing agent impregnation step of impregnating a blowing agent in the resin particles in the vessel, and an expanding step of discharging the blowing agent-containing resin particles out of the vessel along with the aqueous medium into an atmosphere with a pressure lower than the pressure inside the vessel to expand the resin particles.

(Production of resin particle using linear low-density polyethylene as base resin)

The resin particles for use in production of the expanded beads of the present invention can be obtained by feeding the linear low-density polyethylene and other optional additives such as a cell controlling agent into an extruder, heating and kneading them to give a resin melt, and thereafter extruding the resin melt out of the extruder, while pelletizing it in a strand cutting system, a hot cutting system or an underwater cutting system.

The average mass per one particle of the resin particles is preferably controlled to 0.1 to 20 mg, more preferably 0.2 to 10 mg, still more preferably 0.3 to 5 mg, and even more preferably 0.4 to 2 mg. The outer shape of the particles is not specifically limited so far as it falls within a range capable of attaining the intended object of the present invention, but is preferably columnar.

In the case where the outer shape of the resin particles is columnar, the particle diameter (length in the extrusion direction) of the resin particles is preferably 0.1 to 3.0 mm, more preferably 0.3 to 1.5 mm. The ratio of the length in the extrusion direction of the resin particles to the length in the direction perpendicular to the extrusion direction of the resin particles (diameter of the resin particles), ratio of length/diameter is preferably 0.5 to 5.0, more preferably 1.0 to 3.0.

In the case of pelletizing by a strand cutting method, the particle diameter, the ratio of length/diameter and the average mass of the resin particles can be controlled by appropriately changing the extrusion rate in extruding the resin melt, the take-up rate of the strand, and the cutter speed in cutting the strand.

(Production of expanded beads)

A preferred production method for the expanded beads of the present invention includes a dispersion step of dispersing the resin particles in an aqueous medium in a vessel, a blowing agent impregnation step of impregnating a blowing agent in the resin particles in the vessel, and an expanding step of discharging the blowing agent-containing resin particles out of the vessel along with the aqueous medium into an atmosphere with a pressure lower than the pressure inside the vessel to expand the resin particles. Preferably, these steps are carried out in this order, more preferably, these steps are carried out as a series of steps. Note that the method of expansion through this series of steps is also referred to as a dispersing medium-discharging expanding method.

As the dispersing medium for dispersing the resin particles obtained in the manner as above, in a closed vessel, an aqueous dispersing medium is preferably used in the dispersion step. The aqueous dispersing medium is a dispersing medium that contains water as a main component. The proportion of water in the aqueous dispersing medium is preferably 70% by mass or more, more preferably 80% by mass or more, even more preferably 90% by mass or more, and may be 100% by mass. The other dispersing medium than water in the aqueous dispersing medium includes ethylene glycol, glycerin, methanol and ethanol.

In the dispersing medium-discharging expanding method, which is favorably employed in the present invention, preferably, a dispersant is added to the dispersing medium, so that the resin particles heated in the vessel do not fuse with one another in the vessel. The dispersant may be any one capable of preventing resin particles from fusing in a vessel. However, use of an inorganic dispersant may be preferred. Examples of the inorganic dispersant include a natural or synthetic clay mineral such as kaolin, mica and clay, and aluminum oxide, titanium oxide, basic magnesium carbonate, basic zinc carbonate, calcium carbonate and iron oxide. One or more of these may be used either singly or as combined. Among them, a natural or synthetic clay mineral is preferred. The amount of the dispersant to be added is preferably 0.001 to 5 parts by mass per 100 parts by mass of the resin particles.

In the case where the dispersant is used, preferably, an anionic surfactant such as sodium dodecylbenzenesulfonate, sodium alkylsulfonate or sodium oleate is used together therewith, as an auxiliary dispersant. Preferably, the auxiliary dispersant is added in an amount of approximately 0.001 to 1 part by mass per 100 parts by mass of the resin particles.

In the blowing agent impregnation step, the blowing agent for use for expanding the resin particles is preferably a physical blowing agent. Examples of the physical blowing agent include an inorganic physical blowing agent and an organic physical blowing agent. Examples of the inorganic physical blowing agent include carbon dioxide, air, nitrogen, helium and argon. Examples of the organic physical blowing agent includes an aliphatic hydrocarbon such as propane, n-butane, isobutane, n-pentane, isopentane, and hexane; a cycloaliphatic hydrocarbon such as cyclopentane and cyclohexane; and a halogenated hydrocarbon such as ethyl chloride, 2,3,3,3-tetrafluoropropene, trans-1,3,3,3-tetrafluoropropene, and trans-1-chloro-3,3,3-trifluoropropene. The physical blowing agent may be used alone or in combination of two or more thereof. An inorganic physical blowing agent and an organic physical blowing agent may be used in combination. The blowing agent for use in the present production method is, from the viewpoint of facilitating the production of the desired expanded beads, preferably an inorganic physical blowing agent, more preferably carbon dioxide.

Although the amount of the blowing agent added is determined in consideration of the desired bulk density of the expanded beads, the type of the blowing agent, and other factors, in the case of using a physical blowing agent, for example, the amount of the physical blowing agent to be added is preferably 0.1 to 30 parts by mass, more preferably 0.5 to 15 parts by mass, relative to 100 parts by mass of the resin particles.

The method for impregnating the blowing agent in the resin particles in the expanded beads production step is preferably a method including dispersing the resin particles in an aqueous dispersing medium in a closed vessel while injecting a blowing agent under pressure into the closed vessel, and heating, pressurizing, and holding the closed vessel to thereby impregnate the blowing agent in the resin particles, for example.

In the expanding step, the pressure (inner pressure) inside the closed vessel during expanding is preferably 0.5 MPa(G) or more, more preferably 0.8 MPa(G) or more. The upper limit is preferably 4 MPa(G) or less, more preferably 3 MPa(G) or less. Within the above range, desired expanded beads can be safely produced with no risk of breakage or explosion of the closed vessel. Also preferably, the closed vessel is heated preferably from 100 to 200°C, more preferably from 130 to 160°C, and then kept at the temperature for approximately 5 to 30 minutes, and thereafter the blowing agent-containing resin particles are taken out of the closed vessel and discharged into an atmosphere having a lower pressure than the inner pressure inside the closed vessel (for example, an atmospheric pressure) to expand the resin particles.

The expanded beads of the present invention having a crystal structure where an intrinsic peak and a high-temperature peak appear in the first DSC curve can be produced, for example, as follows:

First, the resin particle dispersed in the dispersing medium in the closed vessel is heated to a temperature of (melting point of the linear low-density polyethylene constituting the resin particle - 15°C) to (melting point of the linear low-density polyethylene constituting the resin particle + 10°C) and also held at this temperature for a sufficient time, preferably for about 10 to 60 minutes (holding step). Next, by expanding the resin particle that has undergone this holding step, an expanded bead exhibiting the melting peak described above can be obtained. The holding step can be carried out, for example, as part of the dispersing step or the blowing agent impregnation step. Alternatively, the resin particles that have undergone the holding step may be prepared in advance, and the expanded beads may be obtained by expanding the resin particles that have undergone the holding step.

From the viewpoint of enhancing the productivity of the expanded bead, it is preferable to heat the resin particle dispersed in the dispersing medium in the closed vessel in the presence of the blowing agent and carry out the above holding step, and then release the contents of the closed vessel from the inside of the closed vessel into an atmosphere with a pressure lower than the pressure inside the closed vessel to expand the resin particle, thereby giving an expanded bead exhibiting the melting peak described above.

The expanded beads obtained in the manner as above can be expanded in multiple stages to give expanded beads with a higher expansion ratio (lower bulk density). For example, the expanded beads can be pressurized by air or the like to increase the pressure (inner pressure) inside the cells of the expanded beads, and then heated with steam or the like and further expanded (second-stage expansion) to give expanded beads having a higher expansion ratio (lower bulk density). From the viewpoint of producing a molded article having a low apparent density, it is preferable to carry out second-stage expansion.

[Molded article of expanded beads]

The molded article of expanded beads of the present invention is formed by in-mold molding of the expanded beads.

Specifically, the molded article is formed by in-mold molding of the expanded beads containing linear low-density polyethylene as a base resin, wherein the linear low-density polyethylene has a biomass degree of 40% or more as measured according to ASTM D 6866; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 10 J/g or more and 50 J/g or less.

The molded article is also formed by in-mold molding of the expanded beads containing linear low-density polyethylene as a base resin, wherein the linear low-density polyethylene contains a butene component and a hexene component as copolymerization components; the expanded bead has a crystal structure where a melting peak intrinsic to the linear low-density polyethylene (intrinsic peak) and at least one melting peak on a higher temperature side than the intrinsic peak (high-temperature peak) appear on a DSC curve drawn by heating the expanded bead from 23°C to 200°C at a heating rate of 10°C/min; a total heat of fusion of the expanded bead is 70 J/g or more and 100 J/g or less; and a heat of fusion at the high-temperature peak is 30 J/g or more and 50 J/g or less; and a ratio of the heat of fusion at the high-temperature peak to the total heat of fusion of the expanded bead is 0.3 or more and 0.7 or less.

In addition, the molded article is also formed by in-mold molding of the expanded beads containing linear low-density polyethylene as a base resin, wherein the linear low-density polyethylene has a density of 920 kg/m$^3$ or less; the linear low-density polyethylene has a melting point of 120°C or higher and 130°C or lower; and the linear low-density polyethylene comprises, as copolymerization components, a propylene component and at least one $\alpha$-olefin component ($\alpha$1) selected from the group consisting of a butene component, a hexene component, and an octene component.

The molded article of expanded beads of the present invention can be formed by filling a mold with expanded beads and heating them using a heating medium such as steam. Specifically, after expanded beads have been filled in a mold, a heating medium such as steam is introduced into the mold to fuse the expanded beads together, while heating and swelling (secondarily expanding) them, thereby forming a molded article of expanded beads given a shape of the molding space. Also in the in-mold molding in the present invention, the expanded beads can be molded according to a pressure molding method which is such that, after the pressure inside the expanded beads has been controlled to be higher by 0.01 to 0.3 MPa than the atmospheric pressure by previously pressurizing the expanded beads by air under pressure such as a gas to increase the pressure inside the cells of the expanded beads, the expanded beads are filled in a mold under atmospheric pressure or under reduced pressure, and thereafter a heating medium such as steam is introduced into the mold to heat and fuse the expanded beads (for example, JPS51-022951B). Also, the expanded beads can be molded according to a compression filling molding method which is such that expanded beads are filled in a mold that has been pressurized to have a higher pressure than atmospheric pressure using compressed gas, in which the expanded beads have been pressurized to have a higher pressure than the pressurized pressure inside the mold, and then heating is performed to introduce a heating medium such as steam into the cavity of the mold to heat and fuse the expanded beads (JPH04-046217B). In addition, the expanded beads can also be molded according to a normal pressure filling molding method in which expanded beads prepared under a specific condition to have a high secondary expanding force are filled in the cavity of a mold under atmospheric pressure or under reduced pressure, and then heating is performed to introduce a heating medium such as steam to heat and fuse expanded beads (JPH06-049795B), or according to a method of a combination of the above-mentioned methods (JPH06-022919B).

From the viewpoint of enhancing the mechanical properties, the density of the molded article of expanded beads of the present invention is preferably 10 kg/m$^3$ or more, more preferably 13 kg/m$^3$ or more, and still more preferably 15 kg/m$^3$ or more. Also, from the viewpoint of obtaining a lightweight molded article, the density of the molded article of expanded beads is preferably 240 kg/m$^3$ or less, more preferably 200 kg/m$^3$ or less, still more preferably 100 kg/m$^3$ or less, even more preferably 80 kg/m$^3$ or less, and particularly preferably 60 kg/m$^3$ or less.

Note that the density of the molded article of expanded beads can be calculated by dividing the mass of the molded article of expanded beads by the volume to be calculated based on the dimension of the molded article of expanded beads and can be measured according to the method described in the section of Examples.

The molded article of expanded beads of the present invention is lightweight and excellent in mechanical properties, and therefore can be used in applications of food transport containers, packaging/buffering materials for electric/electronic components, vehicle members such as automobile bumpers, building members such as residential heat insulating materials, and miscellaneous goods, as shock absorbing materials, heat insulating materials, various packaging materials and others.

Examples

Next, the present invention is described in further detail with reference to Examples, but the invention is not whatsoever restricted by these Examples.

[First embodiment and second embodiment]

Examples of the first embodiment and second embodiment of the present invention are described below.

[Measurement and evaluation]

The resins, expanded beads, and molded articles of expanded beads used in Examples and Comparative Examples were measured and evaluated as follows. For evaluating the expanded beads or the molded articles of expanded beads, these were left and conditioned under the condition of a relative humidity of 50%, 23°C and 1 atm for 2 days, and then tested for evaluation.

<Biomass degree of polyethylene and biomass degree of expanded beads>

The biomass degree of the polyethylene (linear low-density polyethylene or high-density polyethylene) used in Examples and Comparative Examples is a value determined by measuring the concentration of a radiocarbon $^{14}$C according to ASTM D 6866. The biomass degree of the expanded beads was calculated from the biomass degree of biomass-derived resin used to produce the expanded beads and the content proportion of biomass-derived resin in the expanded beads.

Note that LLA1 to LLA3 and HDA1 in Table A1 are polyethylene listed in the positive list of biomass plastics in the Japan Biomass Plastics Association. In the positive list, LLA1 and LLA3 are described as linear low-density polyethylene represented by a chemical structural formula of $[(C_2H_4)_n(C_4H_8)_m(C_6H_{12})_o]$ and containing a butene component and an hexene component as copolymerization components, while LLA2 is described as linear low-density polyethylene represented by a chemical structural formula of $[(C_2H_4)_n(C_4H_8)_m]$ and containing a butene component as a copolymerization component.

<Density of polyethylene>

The density of the polyethylene (linear low-density polyethylene or high-density polyethylene) used in Examples and Comparative Examples was measured based on Method A (immersion method) of JIS K 7112:1999.

<Content of component derived from α-olefin in linear low-density polyethylene>

The content of the component derived from each α-olefin in linear low density polyethylene was determined by carbon-13 NMR spectroscopy ($^{13}$C-NMR).

First, the linear low-density polyethylene was dissolved in a mixed solvent of o-dichlorobenzene-d$_4$ (ODCB): benzene-d$_6$ ($C_6D_6$) = 4:1 (130°C) to prepare a 10 wt/vol% measurement solution. NMR ($^{13}$C-NMR) spectral measurement of the measurement solution with $^{13}$C as the measurement nucleus was conducted using "JEOL ECZ-400S model" as nuclear magnetic resonance spectrometer. Based on the chemical shift information in the resulting NMR spectra, the component derived from α-olefin in the linear low-density polyethylene was identified while the content (mol%) thereof was calculated.

<Melt flow rate (MFR) of polyethylene and expanded beads>

The melt flow rate (MFR) of the polyethylene (linear low-density polyethylene or high-density polyethylene) used in Examples and Comparative Examples and the melt flow rate (MFR) of the expanded beads of Examples and Comparative Examples were measured according to JIS K 7210-1:2014 under conditions of a temperature of 190°C and a load of 2.16 kg. The melt flow rate of the expanded beads was measured using expanded beads that had been subjected to a defoaming treatment within a range that does not significantly impair the physical properties of the resin as the measurement samples. Specifically, the expanded beads were first subjected to a defoaming treatment by heat-pressing the expanded beads for 3 minutes with a heating press machine whose temperature was adjusted to 160°C, thereby preparing a resin sheet made of the resin constituting the expanded beads. The melt flow rate was measured using a pelleted sample obtained by cutting the resin sheet.

[Melting point of polyethylene]

The melting point of polyethylene (linear low-density polyethylene or high-density polyethylene) used in Examples and Comparative Examples was measured by heat flux differential scanning calorimetry based on JIS K 7121:2012. A high-sensitive differential scanning calorimeter "EXSTAR DSC7020" (manufactured by SII Nano Technology Inc.) was used as the measurement apparatus. For condition control of the test piece, "(2) a case of measuring a melting temperature after predetermined heat treatment" was employed, in which a test piece was heated from 23°C to 200°C at a heating rate of 10°C/min under the condition of a nitrogen flow rate of 30 mL/min, then kept at the temperature for 10 minutes, cooled down to 23°C at a cooling rate of 10°C/min, and again heated up to 200°C at a heating rate of 10°C/min to draw a DSC curve (DSC curve at the time of second heating). Next, the peak temperature of the melting peak on the DSC curve was read, and the value was referred to as the melting point.

Note that, in the case where multiple melting peaks appear in the DSC curve, the peak top temperature of the melting peak having the largest area is adopted as the melting point. At this time, by distinguishing each melting peak by the valley temperature of the DSC curve located between the peak top temperatures of their respective melting peaks and comparing the area (heat of fusion) of each melting peak, the melting peak having the largest area can be determined. The valley temperature of the DSC curve can also be determined from the temperature at which the value of the ordinate of the derivative curve of the DSC curve (DDSC) becomes 0, and thus can also be determined from the derivative curve of the DSC.

<Heat of fusion of polyethylene and total heat of fusion of expanded beads>

The heat of fusion of the polyethylene (linear low-density polyethylene or high-density polyethylene) used in Examples and Comparative Examples and the total heat of fusion of the expanded beads were measured according to JIS K 7122:2012.

First, using a test piece of polyethylene or expanded beads, DSC curves at the time of the second heating were drawn in the same manner as in the measurement of the melting point of polyethylene described above. The point at a temperature of 80°C on the obtained DSC curve at the time of second heating was defined as $\alpha$, and the point on the DSC curve corresponding to the end temperature of melting was defined as $\beta$. The area of the part surrounded by the DSC curve at an interval between the point $\alpha$ and the point $\beta$ and the line segment ($\alpha$-$\beta$) was measured, and the heat of fusion of polyethylene or the total heat of fusion of the expanded beads were calculated from the area.

<Heat of fusion at high-temperature peak of expanded beads>

The heat of fusion at the high-temperature peak of expanded beads were measured by heat flux differential scanning calorimetry according to JIS K 7122:2012. Specifically, about 2 mg of expanded beads were sampled and heated from 23°C to 200°C at a heating rate of 10°C/min to draw a DSC curve (DSC curve in the first heating) having two or more melting peaks, using a differential scanning calorimeter (EXSTAR DSC7020). In the following description, an intrinsic peak of polyethylene (linear low-density polyethylene or high-density polyethylene) is represented by A, and a high-temperature peak appearing on the higher temperature side than it is represented by B.

A straight line connecting a point $\alpha$ corresponding to 80°C on the DSC curve and a point $\beta$ on the DSC curve corresponding to the melting end temperature T of the expanded beads was drawn ($\alpha$-$\beta$). The melting end temperature T is an endpoint on the high temperature side at the high-temperature peak B, and is an intersection point of the high-temperature peak and the high-temperature side base line. Next, from the point $\gamma$ on the DSC curve equivalent to the valley between the intrinsic peak A and the high-temperature peak B, a straight line parallel to the vertical axis of the graph was drawn, and the point crossing the straight line ($\alpha$-$\beta$) was referred to as $\delta$.

The area of the part surrounded by the curve of the high-temperature peak B part on the DSC curve, the line segment ($\delta$-$\beta$), and the line segment ($\gamma$-$\delta$) was determined, and from this area, the heat of fusion at the high-temperature peak was calculated. The heat of fusion at the above high-temperature peak was measured for three different test pieces, and an arithmetic mean of the obtained values was used as the heat of fusion at the high-temperature peak of the expanded beads.

<Bulk density of expanded beads>

About 500 cm$^3$ of a group of expanded beads were filled in a measuring cylinder, and the bulk height of the group of expanded beads in the measuring cylinder was stabilized by lightly beating a few times the bottom of the measuring cylinder against the floor face. The bulk volume of the group of expanded beads that the scale of the measuring cylinder indicated was read, and this was referred to as V1 (L, liter). Next, the mass of the group of expanded beads was measured, and this was referred to as W1 [g].

The mass W1 [g] of the expanded beads was divided by the volume V1 thereof (W1/V1), and the unit thereof was converted into [kg/m$^3$] to give the bulk density of the expanded beads.

<Volume percentage of closed cells in expanded beads>

The volume percentage of closed cells in expanded beads was measured as follows.

A group of expanded beads having a bulk volume of about 20 cm$^3$ was immersed in ethanol to measure the apparent volume Va of the group of expanded beads. Next, the group of expanded beads that had been measured for apparent volume Va was thoroughly dried. Then, the value Vx of a true volume of the group of expanded beads (the sum of the volume of the resin constituting the expanded beads and the total cell volume of the closed cell portion within the expanded beads) was measured according to Procedure C described in ASTM-D2856-70. The true volume Vx was measured using an air comparison pycnometer 930 type (manufactured by Toshiba-Beckman Co., Ltd.). Subsequently, the volume percentage of closed cells was calculated according to expression (1) given below, and the arithmetic mean of five measurement results using different groups of expanded beads was determined.

$$\text{Volume percentage of closed cells } (\%) = (Vx-W/\rho) \times 100/(Va-W/\rho) \qquad (1)$$

Vx: True volume (cm$^3$) of a group of expanded beads as measured by the method above

Va: Apparent volume (cm$^3$) of a group of expanded beads as measured from the rise in water level when the group of expanded beads is submerged in ethanol in a measuring cylinder

W: Mass (g) of group of expanded beads

$\rho$: Density (g/cm$^3$) of resin constituting expanded beads

<Average cell diameter of expanded beads>

The average cell diameter of expanded beads was measured as follows.

30 expanded beads were randomly chosen from a group of expanded beads. The expanded bead was cut into two portions in such a manner that the cutting line could pass through the center part thereof, and an enlarged photograph of one cross section of every bead was taken. On every cross section photograph, four line segments were drawn from the outermost surface on one side of the expanded bead to the outermost surface on the other side passing through the center part in such a manner that the angle formed by the neighboring two line segments could be equiangular to each other. The number of the cells crossing each line segment was counted, and total length of the four line segments was divided by the total number of cells crossing the line segments to determine the cell diameter of each expanded bead, and the found data were arithmetically averaged to give an average cell diameter of the expanded beads.

<Ratio of bulk density of first-stage expanded bead to bulk density of second-stage expanded bead>

The bulk density of first-stage expanded beads and the bulk density of second-stage expanded beads were measured according to the bulk density measurement method described above. The bulk density of the first-stage expanded beads was divided by the bulk density of the second-stage expanded beads to calculate the ratio of the bulk density of the first-stage expanded beads to the bulk density of the second-stage expanded beads (bulk density$_{(first-stage\ expansion)}$/bulk density$_{(second-stage\ expansion)}$). Note that the larger the value of the ratio, the better expandability of a second-stage expansion since the second-stage expanded beads having a low bulk density can be obtained.

<State of second-stage expanded beads>

The surface state of the second-stage expanded bead was visually observed. The case where the expanded beads had no distinct wrinkles with little shrinkage of the expanded beads observed was evaluated as "good", and the case where the expanded beads had distinct wrinkles with much shrinkage of the expanded beads observed was evaluated as "bad".

In the case where the above evaluation is "good", there is little variation in density between the resulting second-stage expanded beads, making it easy to control the density of the expanded beads when producing the desired molded article, while the expanded beads stably express good in-mold moldability.

<Molding pressure range capable of molding good article>

A molded article of expanded beads was molded by changing the molding pressure (molding steam pressure) by 0.01 MPa between 0.10 and 0.20 MPa (G) according to the method described later in <Production of molded article of expanded beads>, and in-mold moldability of the resulting molded article was evaluated with respect to the following items: fusion-bonding properties, surface appearance (gap = degree of voids), recovery properties (recovery properties of swelling or shrinkage after in-mold molding). The molded article that met the criteria described below was considered to be a pass, and the steam pressure at which all items were passed was considered to be a moldable steam pressure. Note that the pressure with (G) is a gauge pressure, that is, a pressure value based on atmospheric pressure.

A wider range from the lower limit to the upper limit of the moldable steam pressure is more suitable for a wider moldable range.

(Fusion bonding properties)

The molded article of expanded beads were bent and broken, and the number (C1) of expanded beads present on the broken surface and the number (C2) of broken expanded beads were determined. The ratio of the number of the broken expanded beads to the number of the above expanded beads (C2/C1 × 100) was calculated as the material fracture rate. The measurement was taken five times using different test pieces to determine the material fracture rate of each test piece. A material fracture rate of 80% or more based on the arithmetic mean of the measurement results was considered to be a pass, while a material fracture rate of less than 80% was considered to be a fail.

(Surface appearance)

On the central part of the molded article of expanded beads, a square of 100 mm × 100 mm was drawn, diagonal lines were drawn from the corners of the square area, and the number of voids (gaps) with a size of 1 mm × 1 mm or larger on these lines was counted. The case where the number of voids was less than 5 without surface irregularities was considered to be a pass, and the other cases were considered to be a fail.

(Recovery property)

The thicknesses near the four corners (10 mm inward from the corners in the center direction) and the thickness at the center part (intersection portion between the line dividing the molded article into two equal parts in the longitudinal direction and the line dividing the molded article into two equal parts in the lateral direction) of a flat plate-shaped molded article of expanded beads having a length of 250 mm, a width of 200 mm, and a thickness of 50 mm obtained by in-mold molding were each measured. The ratio (%) of the thickness of the center part to the thickness of the thickest part near the four corners was then calculated. A ratio of 95% or more was considered to be a pass, while a ratio of less than 95% was considered to be a fail.

<Density of molded article of expanded beads>

A molded article of expanded beads was left under the condition of a relative humidity of 50%, 23°C, and 1 atm for 2 days. Next, the mass thereof was measured and was referred to as W [g].

Next, based on the dimension of the molded article of expanded beads, the volume V [cm$^3$] of the molded article of expanded beads was measured.

The mass W [g] of the molded article of expanded beads was divided by the volume V thereof (W/V), and the unit was converted into [kg/m$^3$] to determine the density of the molded article of expanded beads.

<Compression stress at 50% strain of molded article of expanded beads>

Test pieces of 5 cm long × 5 cm wide × 2.5 cm height were sampled from the molded articles obtained in Examples and Comparative Examples, and the test pieces were compressed at a compression rate of 10 mm/min to measure the stress at 50% strain. The higher the stress, the better the strength of the molded article of expanded beads. Note that the test pieces were sampled from a molded article molded at the lower limit of the moldable steam pressure.

The resulting compression stress at 50% strain was divided by the density to calculate the ratio of the compression stress at 50% strain of the molded article of expanded beads to the density of the molded article of expanded beads. If the ratio is 4 kPa/[kg/m$^3$] or more and 10 kPa/[kg/m$^3$] or less, the balance between strength and flexibility is good, which is preferred.

[Polyethylene]

The polyethylene (linear low-density polyethylene or high-density polyethylene) used in the first embodiment of the present invention, Examples A1 to A9, and Comparative Examples A1 to A6 thereof are shown in Table A1.

Since Examples A1 to A4 and Example A8 also correspond to the second embodiment of the present invention, the linear low-density polyethylene LLA1 is polyethylene also used in the second embodiment.

Table A1

| Resin symbol | | LLA1 | LLA2 | LLA3 | LLA4 | HDA1 |
|---|---|---|---|---|---|---|
| Resin type | | Linear low-density poly-ethylene | Linear low-density poly-ethylene | Linear low-density poly-ethylene | Linear low-density poly-ethylene | High density polyethylene |
| Manufacturer and grade name | | SLH118 from Braskem | SLL118 from Braskem | SLH218 from Braskem | 2049G from DOW | SHC7220 from Braskem |
| Principal comonomer species in LLDPE | | C4/C6 | C4 | C4/C6 | C8 | - |
| Comonomer content ($\alpha$-olefin compo-nent) (mol%) | C4 (1-bu-tene) | 3.1 | 4.6 | 3.1 | - | Unmeasured |
| | C6 (1-hexene) | 1.4 | - | 1.4 | - | |
| | C8 (1-oc-tene) | - | - | - | 1.8 | |
| | C3 (propy-lene) | 1.6 | 1.6 | 1.6 | - | |
| Molar ratio of comonomer content | C6/C4 | 0.45 | - | 0.45 | - | |
| | C3/[C4+C6] | 0.36 | 0.35 | 0.36 | - | |
| Biomass degree | [%] | 84 | 87 | 84 | 0 | 94 |
| Density | [kg/m$^3$] | 916 | 916 | 916 | 926 | 955 |
| MFR | [g/10 min] | 1.0 | 1.0 | 2.3 | 1.0 | 7.2 |
| Melting point | [°C] | 124 | 123 | 123 | 121 | 133 |
| Heat of fusion | [J/g] | 83 | 80 | 80 | 113 | 200 |

[Production of expanded beads and molded article of expanded beads]

(Example A1)

<Production of expanded beads>

An extruder having an inner diameter of 26 mm, attached with a strand-forming die on the discharge side, was prepared.

LLA1, zinc borate as a cell controlling agent (number-based arithmetic average particle diameter: 7 $\mu$m) were put into the extruder, melted, and kneaded to form a resin melt. The zinc borate was fed so that the content of zinc borate in the expanded beads could be 500 ppm by mass.

The resultant resin melt was extruded out as strands through the strand-forming die, and the extruded strands were cooled in water, and pelletized with a pelletizer to give resin particles having an average mass per particle of 1.5 mg, an average particle diameter of 1.9 mm, and a length/diameter ratio of 1.9, using linear low-density polyethylene as the base resin.

500 g of the resin particles, 3.5 L of water as a dispersing medium, 3 g of kaolin as a dispersant, and 0.2 g of sodium dodecylbenzenesulfonate (trade name: Neogen, by DKS Co., Ltd.) as a surfactant were charged into a 5-L closed vessel.

Next, carbon dioxide as a blowing agent was injected under pressure into the closed vessel, which was then pressurized up to an equilibrium vapor pressure shown in Table A2. Next, while stirred, the contents in the closed vessel were heated up to an expanding temperature (124°C) at a heating rate of 2°C/min. Further, this was kept at the temperature for 15 minutes (holding step). Through this holding step, a heat of fusion (derived from the endothermic curve in DSC measurement) at high-temperature peak was controlled. Thereafter, the contents in the closed vessel were depressurized under atmospheric pressure to give expanded beads (first-stage expanded beads).

The expanded beads obtained as described above were allowed to cure by leaving it in an environment with a temperature of 23°C, a relative humidity of 50%, and 1 atm for 24 hours. Subsequently, the expanded beads after the curing were filled in a pressure resistance closed vessel, and the pressure in the closed vessel was raised from ambient pressure to pressurize the expanded beads. By maintaining the expanded beads in a pressurized state for 24 hours, cells of the expanded beads were impregnated with air. Thereafter, the expanded beads were removed from the closed vessel to obtain expanded beads in which the internal pressure of cells of the expanded beads was 0.5 MPa (G). Subsequently, the expanded beads were transferred into a second-stage expanding device. Steam was supplied into the device to secondarily expand the expanded beads to give expanded beads (second-stage expanded beads) having a bulk density of 22 kg/m$^3$. The expanded beads after the second-stage expansion was used for the measurements described above and the production of a molded article of expanded beads.

<Production of molded article of expanded beads>

After an internal pressure of 0.25 MPa (G) was applied with air to expanded beads, the expanded beads were filled into a mold capable of molding a flat plate with 250 mm long × 200 mm wide × 50 mm thick and then heated by the following heating method.

First, pre-heating (exhaust step) was carried out by supplying steam to the mold in the state where drain valves provided on both sides of the mold were open. Thereafter, steam was supplied from one side of the mold for heating, and then steam was supplied from the other side of the mold for further heating. Subsequently, the mold was heated by supplying steam from both sides of the mold at the predetermined molding heating steam pressure (main heating). After completion of the main heating, the mold was depressurized and cooled with water until the pressure generated on the molding surface of the mold could reach 0.04 MPa(G), and then the mold was opened to remove the molded article of expanded beads.

The obtained molded article was cured in an oven at 80°C for 12 hours to give a molded article of expanded beads (molded article of polyethylene-based resin expanded beads). In the aforementioned evaluation of <Molding pressure range capable of molding good article>, molding was carried out by changing the molding pressure.

The measurement results of physical properties of the resultant expanded beads and the evaluation results of the molded article are shown in Table A2. Note that the biomass degree of the expanded beads was the same as the biomass degree of the polyethylene constituting each expanded bead. In addition, each expanded bead is a non-crosslinked expanded bead.

(Examples A2 to A7)

Expanded beads and molded articles of polyethylene-based resin expanded beads were produced in the same manner as in Example A1 except that the polyethylene, expanding temperature, and equilibrium vapor pressure in Example A1 were changed to the conditions shown in Table A2. The measurement results of physical properties of the resultant expanded beads and the evaluation results of the molded article are shown in Table A2.

(Example A8)

Expanded beads and molded articles of polyethylene-based resin expanded beads were produced in the same manner as in Example A1, except that the expanding temperature and equilibrium vapor pressure in Example A1 were changed to the conditions shown in Table A2 and that in-mold molding was carried out using the resulting first-stage expanded beads. The measurement results of physical properties of the resultant expanded beads and the evaluation results of the molded article are shown in Table A2.

(Example A9)

Expanded beads and molded articles of polyethylene-based resin expanded beads were produced in the same manner as in Example A1, except that the expanding temperature and equilibrium vapor pressure in Example A1 were changed to the conditions shown in Table A2 and that in-mold molding was carried out using the resulting first-stage expanded beads.

The measurement results of physical properties of the resultant expanded beads and the evaluation results of the molded article are shown in Table A2.

(Comparative Examples A1 to A6)

Expanded beads and molded articles of polyethylene-based resin expanded beads were produced in the same manner as in Example A1 except that the polyethylene and expanding temperature in Example A1 were changed to the conditions shown in Table A3. The measurement results of physical properties of the resultant expanded beads and the evaluation results of the molded article are shown in Table A3.

Examples A1 to A4 and Example A8 also correspond to the second embodiment of the present invention.

Table A2

| | | | Example A1 | Example A2 | Example A3 | Example A4 | Example A5 | Example A6 | Example A7 | Example A8 | Example A9 |
|---|---|---|---|---|---|---|---|---|---|---|---|---|
| Base resin type | | - | LLA1 | LLA1 | LLA1 | LLA1 | LLA2 | LLA2 | LLA3 | LLA1 | LLA1 |
| Expanding temperature | | °C | 124.2 | 123.6 | 123.6 | 124.1 | 123.5 | 123.2 | 124.2 | 124.1 | 125.1 |
| Equilibrium vapor pressure | | MPa(G) | 4.0 | 4.0 | 4.0 | 4.5 | 4.0 | 4.0 | 4.0 | 4.5 | 3.9 |
| Expanded bead(s) | Total heat of fusion | J/g | 83 | 83 | 83 | 83 | 80 | 80 | 83 | 83 | 83 |
| | High-temperature peak heat | J/g | 35 | 41 | 50 | 35 | 35 | 40 | 36 | 35 | 25 |
| | High-temperature peak heat/Total heat of fusion | - | 0.42 | 0.49 | 0.60 | 0.42 | 0.44 | 0.50 | 0.43 | 0.42 | 0.30 |
| | Biomass degree | % | 84 | 84 | 84 | 84 | 87 | 87 | 84 | 84 | 84 |
| | MFR (190°C, 2.16 kg) | g/10min | 1.0 | 1.0 | 1.0 | 1.0 | 1.0 | 1.0 | 2.2 | 1.0 | 1.0 |
| | Bulk density of first-stage expanded beads | kg/m³ | 100 | 153 | 230 | 85 | 117 | 138 | 92 | 85 | 85 |
| | Volume percentage of closed cells in first-stage expanded beads | % | 95 | 96 | 99 | 93 | 95 | 95 | 94 | 93 | 91 |
| | Average cell diameter of first-stage expanded beads | μm | 83 | 80 | 75 | 88 | 92 | 89 | 80 | 88 | 89 |
| | Bulk density of second-stage expanded beads | kg/m³ | 22 | 32 | 60 | 15 | 24 | 29 | 20 | | |
| | Bulk density$_{(first\text{-}stage\ expansion)}$/bulk density$_{(second\text{-}stage\ expansion)}$ | - | 4.5 | 4.8 | 3.9 | 5.5 | 4.8 | 4.8 | 4.6 | | - |
| | State of second-stage expanded beads | | Good | Good | Good | Good | Good | Good | Good | | |
| | Volume percentage of closed cells in second-stage expanded beads | % | 90 | 92 | 91 | 90 | 84 | 90 | 90 | | |

EP 4 502 023 A1

29

(continued)

| | | Example A1 | Example A2 | Example A3 | Example A4 | Example A5 | Example A6 | Example A7 | Example A8 | Example A9 |
|---|---|---|---|---|---|---|---|---|---|---|
| Molded article of expanded beads | Average cell diameter of second-stage expanded beads (μm) | 120 | 125 | 90 | 150 | 120 | 120 | 120 | | |
| | Molded article density (kg/m³) | 28 | 40 | 75 | 19 | 30 | 36 | 25 | 100 | 100 |
| | Molding range to yield good article (lower limit-upper limit of steam pressure) MPa(G) | 0.14-0.16 | 0.14-0.16 | 0.15-0.18 | 0.14-0.16 | 0.14 | 0.14 | 0.14-0.15 | 0.14-0.16 | 0.14 |
| | Compression stress at 50% strain (kPa) | 125 | 175 | 395 | 95 | 125 | 140 | 115 | 540 | 505 |
| | Compression stress at 50% strain/density (kPa/[kg/m³]) | 4.5 | 4.4 | 5.3 | 5.0 | 4.1 | 3.9 | 4.6 | 5.4 | 5.1 |

Table A3

| | | Comparative Example A1 | Comparative Example A2 | Comparative Example A3 | Comparative Example A4 | Comparative Example A5 | Comparative Example A6 |
|---|---|---|---|---|---|---|---|
| Base resin type | - | LLA1 | LLA2 | LLA4 | HDA 1 | HDA1 | HDA 1 |
| Expanding temperature | °C | 124.8 | 126.1 | 121.1 | 131.2 | 130.6 | 129.1 |
| Equilibrium vapor pressure | MPa(G) | 4.0 | 4.0 | 4.0 | 4.0 | 4.0 | 4.0 |
| Expanded bead(s) | Total heat of fusion | J/g | 83 | 80 | 111 | 183 | 183 | 183 |
| | High-temperature peak heat | J/g | 5 | 5 | 44 | 5 | 16 | 75 |
| | High-temperature peak heat/Total heat of fusion | - | 0.06 | 0.06 | 0.40 | 0.03 | 0.09 | 0.41 |
| | Biomass degree | % | 84 | 87 | 0 | 94 | 94 | 94 |
| | MFR (190°C, 2.16 kg) | g/10min | 1.0 | 1.0 | 1.0 | 7.0 | 7.0 | 7.0 |
| | Bulk density of first-stage expanded beads | kg/m$^3$ | 60 | 60 | 230 | 225 | 250 | 460 |
| | Volume percentage of closed cells in first-stage expanded beads | % | 80 | 80 | 95 | 98 | 93 | 95 |
| | Average cell diameter of first-stage expanded beads | μm | 100 | 100 | 45 | 70 | 50 | 50 |
| | Bulk density of second-stage expanded beads | kg/m$^3$ | 20 | 20 | 92 | 200 | 250 | 460 |
| | Bulk density$_{(first\text{-}stage\ expansion)}$/bulk density$_{(second\text{-}stage\ expansion)}$ | - | 3.0 | 3.0 | 2.5 | 1.1 | 1.0 | 1.0 |
| | State of second-stage expanded beads | | Bad | Bad | Good | Good | Good | Good |
| | Volume percentage of closed cells in second-stage expanded beads | % | 75 | 70 | 91 | 95 | 90 | 90 |
| | Average cell diameter of second-stage expanded beads | μm | 150 | 150 | 60 | 70 | 50 | 50 |

31

(continued)

| | | | Comparative Example A1 | Comparative Example A2 | Comparative Example A3 | Comparative Example A4 | Comparative Example A5 | Comparative Example A6 |
|---|---|---|---|---|---|---|---|---|
| Molded article of expanded beads | Molded article density | kg/m$^3$ | 25 | 25 | 114 | 247 | 309 | 569 |
| | Molding range to yield good article | MPa(G) | None | None | None | None | None | None |

From the results shown in Table A2, it is known that the expanded beads of Examples have a high biomass degree and are excellent in in-mold moldability. Also, it is known that a molded article of polyethylene-based resin expanded beads having a low apparent density can be favorably obtained. It is further known that the molded article of polyethylene-based resin expanded beads produced by using the expanded beads of Examples has a high compression stress and excellent strength in spite of a low apparent density.

Regarding the second embodiment of the present invention, from the results shown in Table A2, it is known that the expanded beads of Examples A1 to A4 and A8 can be used to produce a molded article of expanded beads over a wide density range, have a wide molding range to yield a good article, and are more excellent in moldability. Also, it is known that a molded article of expanded beads having a low apparent density can be favorably obtained. It is further known that the molded article of polyethylene-based resin expanded beads produced by using the expanded beads of Examples has a high biomass degree, a high compression stress, and excellent strength in spite of a low apparent density.

[Third embodiment]

Examples of the third embodiment of the present invention are described below.

Next, the present invention is described in further detail with reference to Examples, but the invention is not whatsoever restricted by these Examples.

[Measurement and Evaluation]

The resins, expanded beads, and molded articles of expanded beads used in Examples and Comparative Examples were measured and evaluated as follows. For evaluating the expanded beads and the molded articles of expanded beads, these were left and conditioned under the condition of a relative humidity of 50%, 23°C and 1 atm for 2 days, and then tested for evaluation.

<Expandability evaluation (expanding temperature range to yield good article)>

In the expansion of the resin particles in <Production of expanded beads> described later, the expanding temperature was changed by 0.1°C to produce expanded beads (first-stage expanded beads). At that time, the equilibrium vapor pressure in the closed vessel was 4.0 MPa (G).

The bulk density and condition of the expanded beads obtained by expansion at each expanding temperature were evaluated. Specifically, the case where expanded beads had a bulk density of 100 kg/m$^3$ or less and no clear wrinkles with little shrinkage of the expanded beads observed was defined as an expanding temperature to yield a good article, and based on this, the expanding temperature range to yield a good article was evaluated.

A wider the range from the lower limit to the upper limit of the expanding temperature range to yield a good article is more suitable because the resin particles has good expandability during expansion.

<Biomass degree of linear low-density polyethylene and biomass degree of expanded beads>

The biomass degree of the linear low-density polyethylene used in Examples and Comparative Examples is a value determined by measuring the concentration of a radiocarbon $^{14}$C according to ASTM D 6866. The biomass degree of the expanded beads was calculated from the biomass degree of biomass-derived resin used to produce the expanded beads and the content proportion of biomass-derived resin in the expanded beads.

<Density of linear low-density polyethylene>

The density ($\rho$) of the linear low-density polyethylene used in Examples and Comparative Examples was measured based on Method A (immersion method) of JIS K 7112:1999.

<Content of component derived from $\alpha$-olefin in linear low-density polyethylene>

The content of the component derived from each $\alpha$-olefin in linear low-density polyethylene can be determined by carbon-13 NMR spectroscopy ($^{13}$C-NMR).

First, the linear low-density polyethylene was dissolved in a mixed solvent of o-dichlorobenzene-d$_4$ (ODCB): benzene-d$_6$ (C$_6$D$_6$) = 4:1 (130°C) to prepare a 10 wt/vol% measurement solution. NMR ($^{13}$C-NMR) spectral measurement of the measurement solution with $^{13}$C as the measurement nucleus was conducted using "JEOL ECZ-400S model" as nuclear magnetic resonance spectrometer. Based on the chemical shift information in the resulting NMR spectra, the component derived from $\alpha$-olefin in the linear low-density polyethylene was identified while the content (mol%) thereof was calculated.

<Melt flow rate (MFR) of linear low-density polyethylene and expanded beads>

The melt flow rate (MFR) of the linear low-density polyethylene used in Examples and Comparative Examples and the melt flow rate (MFR) of the expanded beads of Examples and Comparative Examples were measured according to JIS K 7210-1:2014 under conditions of a temperature of 190°C and a load of 2.16 kg. In the measurement of the melt flow rate of the expanded beads, the expanded beads were first subjected to a defoaming treatment by heat-pressing the expanded beads for 3 minutes with a heating press machine whose temperature was adjusted to 160°C, thereby preparing a resin sheet made of the resin constituting the expanded beads. The melt flow rate was measured using a pelleted sample obtained by cutting the resin sheet.

<Melting point of linear low-density polyethylene>

The melting point (Tm) of the linear low-density polyethylene used in Examples and Comparative Examples was measured by heat flux differential scanning calorimetry based on JIS K 7121:2012. A high-sensitive differential scanning calorimeter "EXSTAR DSC7020" (manufactured by SII Nano Technology Inc.) was used as the measurement apparatus. For condition control of the test piece, "(2) a case of measuring a melting temperature after predetermined heat treatment" was employed, in which a test piece was heated from 23°C to 200°C at a heating rate of 10°C/min under the condition of a nitrogen flow rate of 30 mL/min, then kept at the temperature for 10 minutes, cooled down to 23°C at a cooling rate of 10°C/min, and again heated up to 200°C at a heating rate of 10°C/min to draw a DSC curve (DSC curve at the time of second heating). Next, the peak temperature of the melting peak on the DSC curve was read, and the value was referred to as the melting point.

Note that, in the case where multiple melting peaks appear in the DSC curve, the peak top temperature of the melting peak having the largest area is adopted as the melting point. At this time, by distinguishing each melting peak by the valley temperature of the DSC curve located between the peak top temperatures of their respective melting peaks and comparing the area (heat of fusion) of each melting peak, the melting peak having the largest area can be determined. The valley temperature of the DSC curve can also be determined from the temperature at which the value of the ordinate of the derivative curve of the DSC curve (DDSC) becomes 0, and thus can also be determined from the derivative curve of the DSC.

<Heat of fusion of linear low-density polyethylene and total heat of fusion of expanded beads>

The heat of fusion of the linear low-density polyethylene used in Examples and Comparative Examples and the total heat of fusion of the expanded beads were measured according to JIS K 7122:2012.

First, using a test piece of linear low-density polyethylene or expanded beads, DSC curves at the time of the second heating were drawn in the same manner as in the measurement of the melting point of linear low-density polyethylene described above. The point at a temperature of 80°C on the obtained DSC curve at the time of second heating was defined as $\alpha$, and the point on the DSC curve corresponding to the end temperature of melting was defined as $\beta$. The area of the part surrounded by the DSC curve at an interval between the point $\alpha$ and the point $\beta$ and the line segment ($\alpha$-$\beta$) was measured, and the heat of fusion of linear low-density polyethylene or the total heat of fusion of the expanded beads were calculated from the area.

<Heat of fusion at high-temperature peak of expanded beads>

The heat of fusion at the high-temperature peak of expanded beads were measured by heat flux differential scanning calorimetry according to JIS K 7122:2012. Specifically, about 2 mg of expanded beads were sampled and heated from 23°C to 200°C at a heating rate of 10°C/min to draw a DSC curve (DSC curve in the first heating) having two or more melting peaks, using a differential scanning calorimeter (EXSTAR DSC7020). In the following description, an intrinsic peak of linear low-density polyethylene is represented by A, and a high-temperature peak appearing on the higher temperature side than it is represented by B.

A straight line connecting a point $\alpha$ corresponding to 80°C on the DSC curve and a point $\beta$ on the DSC curve corresponding to the melting end temperature T of the expanded beads was drawn ($\alpha$-$\beta$). The melting end temperature T is an endpoint on the high temperature side at the high-temperature peak B, and is an intersection point of the high-temperature peak and the high-temperature side base line. Next, from the point $\gamma$ on the DSC curve equivalent to the valley between the intrinsic peak A and the high-temperature peak B, a straight line parallel to the vertical axis of the graph was drawn, and the point crossing the straight line ($\alpha$-$\beta$) was referred to as $\delta$.

The area of the part surrounded by the curve of the high-temperature peak B part on the DSC curve, the line segment (δ-β), and the line segment (γ-δ) was determined, and from this area, the heat of fusion at the high-temperature peak was calculated. The heat of fusion at the above high-temperature peak was measured for three different test pieces, and an arithmetic mean of the obtained values was used as the heat of fusion at the high-temperature peak of the expanded beads.

<Bulk density of expanded beads>

About 500 cm$^3$ of a group of expanded beads were filled in a measuring cylinder, and the bulk height of the expanded beads group in the measuring cylinder was stabilized by lightly beating a few times the bottom of the measuring cylinder against the floor face. The bulk volume of the expanded beads group that the scale of the measuring cylinder indicated was read, and this was referred to as V1 (L). Next, the mass of the expanded beads group was measured, and this was referred to as W1 [g].

The mass W1 [g] of the expanded beads was divided by the volume V1 thereof (W1/V1), and the unit thereof was converted into [kg/m$^3$] to give the bulk density of the expanded beads.

<Volume percentage of closed cells in expanded beads>

The volume percentage of closed cells in expanded beads was measured as follows. A group of expanded beads having a bulk volume of about 20 cm$^3$ was immersed in ethanol to measure the apparent volume Va of the group of expanded beads. Next, the group of expanded beads that had been measured for apparent volume Va was thoroughly dried. Then, the value Vx of a true volume of the group of expanded beads (the sum of the volume of the resin constituting the expanded beads and the total cell volume of the closed cell portion within the expanded beads) was measured according to Procedure C described in ASTM-D2856-70. The true volume Vx was measured using an air comparison pycnometer 930 type (manufactured by Toshiba-Beckman Co., Ltd.). Subsequently, the volume percentage of closed cells was calculated according to expression (1) given below, and the arithmetic mean of five measurement results using different groups of expanded beads was determined.

$$\text{Volume percentage of closed cells (\%)} = (Vx\text{-}W/\rho) \times 100/(Va\text{-}W/\rho) \qquad (1)$$

Vx: True volume (cm$^3$) of a group of expanded beads as measured by the method above
Va: Apparent volume (cm$^3$) of a group of expanded beads as measured from the rise in water level when the group of expanded beads is submerged in ethanol in a measuring cylinder
W: Mass of group of expanded beads (g)
ρ: Density of resin constituting expanded beads (g/cm$^3$)

<Average Cell Diameter of Expanded Beads>

The average cell diameter of expanded beads was measured as follows.

30 expanded beads were randomly chosen from a group of expanded beads. The expanded bead was cut into two portions in such a manner that the cutting line could pass through the center part thereof, and an enlarged photograph of one cross section of every bead was taken. On every cross section photograph, four line segments were drawn from the outermost surface on one side of the expanded bead to the outermost surface on the other side passing through the center part in such a manner that the angle formed by the neighboring two line segments could be equiangular to each other. The number of the cells crossing each line segment was counted, and total length of the four line segments was divided by the total number of cells crossing the line segments to determine the cell diameter of each expanded bead, and the found data were arithmetically averaged to give an average cell diameter of the expanded beads.

<Ratio of bulk density of first-stage expanded bead to bulk density of second-stage expanded bead>

The bulk density of first-stage expanded beads and the bulk density of second-stage expanded beads were measured according to the bulk density measurement method described above. The bulk density of the first-stage expanded beads was divided by the bulk density of the second-stage expanded beads to calculate the ratio of the bulk density of the first-stage expanded beads to the second-stage expanded beads (bulk density$_{\text{(first-stage expansion)}}$/bulk density$_{\text{(second-stage expansion)}}$). Note that the larger the value of the ratio, the better the expandability of the second-stage expansion since the second-stage expanded beads having a low bulk density can be obtained.

<State of Second-stage Expanded Bead>

The surface state of the second-stage expanded bead was visually observed. The case where the expanded beads had no distinct wrinkles with little shrinkage of the expanded beads observed was evaluated as "good", and the case where the expanded beads had distinct wrinkles with much shrinkage of the expanded beads observed was evaluated as "bad".

In the case where the above evaluation is "good", there is little variation in density between the resulting second-stage expanded beads, making it easy to control the density of the expanded beads when producing the desired molded article, while the expanded beads stably express good in-mold moldability.

<Molding pressure range capable of molding good article>

A molded article of expanded beads was molded by changing the molding pressure (molding steam pressure) by 0.01 MPa between 0.10 and 0.20 MPa (G) according to the method described later in <Production of molded article of expanded beads>, and in-mold moldability of the resulting molded article was evaluated with respect to the following items: fusion-bonding properties, surface appearance (gap = degree of voids), recovery properties (recovery properties of swelling or shrinkage after in-mold molding). The molded article that met the criteria described below was considered to be a pass, and the steam pressure at which all items were passed was considered to be a moldable steam pressure. Note that the pressure with (G) is a gauge pressure, that is, a pressure value based on atmospheric pressure.

A wider range from the lower limit to the upper limit of the moldable steam pressure is more suitable for a wider moldable range.

(Fusion bonding properties)

The molded article of expanded beads were bent and broken, and the number (C1) of expanded beads present on the broken surface and the number (C2) of broken expanded beads were determined. The ratio of the number of the broken expanded beads to the number of the above expanded beads (C2/C1 × 100) was calculated as the material fracture rate. The measurement was taken five times using different test pieces to determine the material fracture rate of each test piece. A material fracture rate of 80% or more based on the arithmetic mean of the measurement results was considered to be a pass, while a material fracture rate of less than 80% was considered to be a fail.

(Surface appearance)

On the central part of the molded article of expanded beads, a square of 100 mm × 100 mm was drawn, diagonal lines were drawn from the corners of the square area, and the number of voids (gaps) with a size of 1 mm × 1 mm or larger on these lines was counted. The case where the number of voids was less than 5 without surface irregularities was considered to be a pass, and the other cases were considered to be a fail.

(Recovery properties)

The thicknesses near the four corners (10 mm inward from the corners in the center direction) and the thickness at the center part(intersection portion between the line dividing the molded article into two equal parts in the longitudinal direction and the line dividing the molded article into two equal parts in the lateral direction) of a flat plate-shaped molded article of expanded beads having a length of 250 mm, a width of 200 mm, and a thickness of 50 mm obtained by in-mold molding were each measured. The ratio (%) of the thickness of the center part to the thickness of the thickest part near the four corners was then calculated. A ratio of 95% or more was considered to be a pass, while a ratio of less than 95% was considered to be a fail.

<Density of Molded Article of Expanded Beads>

A molded article of expanded beads was left under the condition of a relative humidity of 50%, 23°C, and 1 atm for 2 days. Next, the mass thereof was measured and was referred to as W [g].

Next, based on the dimension of the molded article of expanded beads, the volume V [cm$^3$] of the molded article of expanded beads was measured.

The mass W [g] of the molded article of expanded beads was divided by the volume V thereof (W/V), and the unit was converted into [kg/m$^3$] to determine the density of the molded article of expanded beads.

<Compression stress at 50% strain of molded article of expanded beads>

Test pieces of 5 cm long × 5 cm wide × 2.5 cm height were sampled from the molded articles obtained in Examples and Comparative Examples, and the test pieces were compressed at a compression rate of 10 mm/min to measure the stress at 50% strain. The higher the stress, the better the strength of the molded article of expanded beads.
Note that the resulting compression stress at 50% strain was divided by the density to calculate the ratio of the compression stress at 50% strain of the molded article of expanded beads to the density of the molded article of expanded beads. If the ratio is 4 kPa/[kg/m$^3$] or more and 10 kPa/[kg/m$^3$] or less, the balance between strength and flexibility is good, which is preferred.

<Compression set of molded article of expanded beads>

The compression set of the molded article of expanded beads was measured based on JIS K 6767:1999.
First, three rectangular test pieces each having a length of 50 mm, a width of 50 mm, and a thickness of 25 mm were cut out from the molded article of expanded beads, excluding the skin layer at the time of molding. In an environment at a temperature of 23°C and a relative humidity of 50%, each test piece was compressed to a state of being strained by 25% in the thickness direction of the test piece and then left in this state for 22 hours. Thereafter, the test piece was released from the compressed state, and the thickness of the test piece was measured 24 hours after the end of compression. The compression set (%) of each test piece was determined by dividing the amount of change in the thicknesses of the test piece before and after the test by the thicknesses of the test piece before the test to use the arithmetic mean thereof as the compression set (%).
The smaller the value of the compression set, the better the recovery property of the shape of the molded article of expanded beads after compression of the molded article of expanded beads. Therefore, the molded article of expanded beads having a small value of compression set can be suitably used in various applications. From such a viewpoint, the compression set of the molded article of expanded beads is preferably 3.0% or less, more preferably 2.9% or less, still more preferably 2.8% or less.

[Linear low-density polyethylene]

The linear low-density polyethylene used in the third embodiment of the present invention, Examples B1 to B6, and Comparative Examples B1 to B7 thereof are shown in Table B1. Note that Table B1 also shows whether the density ρ (kg/m$^3$) and melting point Tm (°C) of the linear low-density polyethylene used in Examples and Comparative Examples satisfy the following expression (1):

$$\rho < 1.14 \times Tm + 779 \quad (1)$$

Table B1

| Resin symbol | | LLB1 | LLB2 | LLB3 | LLB4 | LLB5 | LLB6 | LLB7 | LLB8 |
|---|---|---|---|---|---|---|---|---|---|
| Manufacturer and grade name | | SLH118 from Braskem | SLL118 from Braskem | SLH218 from Braskem | SP310 from LG Chem | FG31 from Braskem | 2601 from DOW | UF442 from JPP | 2049G from DOW |
| Comonomer species | | C4/C6/C3 | C4/C3 | C4/C6/C3 | C6 | C4 | C6 | C4 | C8 |
| Comonomer content ($\alpha$-olefin component) (mol%) | C4 (1-butene) | 3.1 | 4.6 | 3.1 | 5.0 | 4.5 | - | 2.7 | - |
| | C6 (1-hexene) | 1.4 | - | 1.4 | - | - | 2.7 | - | - |
| | C8 (1-octene) | - | - | - | - | - | - | - | 1.8 |
| | C3 (propylene) | 1.6 | 1.6 | 1.6 | - | - | - | - | - |
| | Total | 6.1 | 6.2 | 6.1 | 5.0 | 4.5 | 2.7 | 2.7 | 1.8 |
| Molar ratio of comonomer content | C3/C4 | 0.52 | 0.35 | 0.52 | - | - | - | - | - |
| | C3/C6 | 1.1 | - | 1.1 | - | - | - | - | - |
| | C3/[C3+C4+C6] | 0.26 | 0.26 | 0.26 | - | - | - | - | - |
| Biomass degree | [%] | 84 | 87 | 84 | 0 | 0 | 0 | 0 | 0 |
| Density ($\rho$) | [kg/m$^3$] | 916 | 916 | 916 | 918 | 919 | 924 | 924 | 926 |
| MFR | [g/10min] | 1.0 | 1.0 | 2.3 | 2.3 | 1.1 | 1.4 | 1.8 | 1.0 |
| Melting point (Tm) | [°C] | 124 | 123 | 123 | 117 | 121 | 120 | 121 | 121 |
| Heat of fusion | [J/g] | 83 | 80 | 80 | 84 | 81 | 92 | 81 | 113 |
| 1.14×Tm+779 | [kg/m3] | 920 | 919 | 919 | 912 | 917 | 916 | 917 | 916 |
| Expression (1) ($\rho$<1.14×Tm+779) | | Satisfied | Satisfied | Satisfied | Not satisfied | Not satisfied | Not satisfied | Not satisfied | Not satisfied |

[Production of expanded beads and molded article of expanded beads]

(Example B1)

<Production of expanded beads>

An extruder having an inner diameter of 26 mm, attached with a strand-forming die on the discharge side, was prepared.

LLB1, zinc borate as a cell controlling agent (number-based arithmetic average particle diameter: 7 $\mu$m) were put into the extruder, melted, and kneaded to form a resin melt. The zinc borate was fed so that the content of zinc borate in the expanded beads could be 500 ppm by mass.

The resultant resin melt was extruded out as strands through the strand-forming die, and the extruded strands were cooled in water, and pelletized with a pelletizer to give cylindrical resin particles having an average mass per particle of 1.5 mg, an average particle diameter of 1.9 mm, and a length/diameter ratio of 1.9, using linear low-density polyethylene as the base resin.

500 g of the resin particles, 3.5 L of water as a dispersing medium, 3 g of kaolin as a dispersant, and 0.2 g of sodium dodecylbenzenesulfonate (trade name: Neogen, by DKS Co., Ltd.) as a surfactant were charged into a 5-L closed vessel.

Next, carbon dioxide as a blowing agent was injected under pressure into the closed vessel, which was then pressurized up to an equilibrium vapor pressure shown in Table B2. Next, while stirred, the contents in the closed vessel were heated up to an expanding temperature (124°C) at a heating rate of 2°C/min. Further, this was kept at the temperature for 15 minutes (holding step). Through this holding step, a heat of fusion (derived from the endothermic curve in DSC measurement) at high-temperature peak was controlled. Thereafter, the contents in the closed vessel were depressurized under atmospheric pressure to give expanded beads (first-stage expanded beads).

The expanded beads obtained as described above were allowed to cure by leaving it in an environment with a temperature of 23°C, a relative humidity of 50%, and 1 atm for 24 hours. Subsequently, the expanded beads after the curing were filled in a pressure resistance closed vessel, and the pressure in the closed vessel was raised from ambient pressure to pressurize the expanded beads. By maintaining the expanded beads in a pressurized state for 24 hours, cells of the expanded beads were impregnated with air. Thereafter, the expanded beads were removed from the closed vessel to obtain expanded beads in which the internal pressure of cells of the expanded beads was 0.5 MPa (G). Subsequently, the expanded beads were transferred into a second-stage expanding device. Steam was supplied into the device to secondarily expand the expanded beads to give expanded beads (second-stage expanded beads) having a bulk density of 22 kg/m$^3$. The expanded beads after the second-stage expansion was used for the measurements described above and the production of a molded article of expanded beads.

<Production of molded article of expanded beads>

After an internal pressure of 0.25 MPa (G) was applied with air to expanded beads, the expanded beads were filled into a mold capable of molding a flat plate with 250 mm long × 200 mm wide × 50 mm thick and then heated by the following heating method.

First, pre-heating (exhaust step) was carried out by supplying steam to the mold in the state where drain valves provided on both sides of the mold were open. Thereafter, steam was supplied from one side of the mold for heating, and then steam was supplied from the other side of the mold for further heating. Subsequently, the mold was heated by supplying steam from both sides of the mold at the predetermined molding heating steam pressure (main heating). After completion of the main heating, the mold was depressurized and cooled with water until the pressure generated on the molding surface of the mold could reach 0.04 MPa(G), and then the mold was opened to remove the molded article of expanded beads.

The obtained molded article was cured in an oven at 80°C for 12 hours to give a molded article of expanded beads (molded article of polyethylene-based resin expanded beads). In the aforementioned evaluation of <Molding pressure range capable of molding good article >, molding was carried out by changing the molding pressure.

The measurement results of physical properties of the resultant expanded beads and the evaluation results of the molded article are shown in Table B2. Note that the biomass degree of the expanded beads, density of the resin constituting the expanded beads, and melting point of the expanded beads were the same as the biomass degree, density, and melting point of each linear low-density polyethylene used for producing each expanded bead. In addition, each expanded bead is a non-crosslinked expanded bead.

(Examples B2 to B6)

Expanded beads and molded articles of polyethylene-based resin expanded beads were produced in the same manner as in Example B1 except that the linear low-density polyethylene, expanding temperature, and equilibrium vapor pressure in Example B1 were changed to the conditions shown in Table B2. The measurement results of physical properties of the resultant expanded beads and the evaluation results of the molded article are shown in Table B2.

(Comparative Examples B1 to B7)

Expanded beads and molded articles of polyethylene-based resin expanded beads were produced in the same manner as in Example B1 except that the linear low-density polyethylene and the expanding temperature in Example B1 were changed to the conditions shown in Table B3. The measurement results of physical properties of the resultant expanded beads and the evaluation results of the molded article are shown in Table B3.

Table B2

| | | | Example B1 | Example B2 | Example B3 | Example B4 | Example B5 | Example B6 |
|---|---|---|---|---|---|---|---|---|
| | Base resin type | - | LLB1 | LLB1 | LLB1 | LLB1 | LLB2 | LLB3 |
| Production condition of expanded beads | Expanding temperature | °C | 124.2 | 123.6 | 123.4 | 124.1 | 123.5 | 124.2 |
| | Equilibrium vapor pressure | MPa(G) | 4.0 | 4.0 | 4.0 | 4.5 | 4.0 | 4.0 |
| Expandability evaluation | Temperature range to yield good article (lower limit-upper limit of expanding temperature) | °C | 124.2-124.5 | 124.2-124.5 | 124.2-124.5 | 124.2-124.5 | 123.7-124.1 | 124.0-124.3 |
| Expanded bead(s) | Total heat of fusion | J/g | 83 | 83 | 83 | 83 | 80 | 83 |
| | High-temperature peak heat | J/g | 35 | 41 | 50 | 35 | 35 | 36 |
| | High-temperature peak heat/Total heat of fusion | - | 0.42 | 0.49 | 0.60 | 0.42 | 0.44 | 0.43 |
| | Biomass degree | % | 84 | 84 | 84 | 84 | 87 | 84 |
| | Density of base resin | kg/m3 | 916 | 916 | 916 | 916 | 916 | 916 |
| | Melting point | °C | 124 | 124 | 124 | 124 | 123 | 123 |
| | MFR (190°C, 2.16 kg) | g/10min | 1.0 | 1.0 | 1.0 | 1.0 | 1.0 | 2.2 |
| | Bulk density of first-stage expanded beads | kg/m$^3$ | 100 | 153 | 230 | 85 | 100 | 92 |
| | Volume percentage of closed cells in first-stage expanded beads | % | 95 | 96 | 99 | 93 | 95 | 94 |
| | Average cell diameter of first-stage expanded beads | μm | 83 | 80 | 75 | 88 | 92 | 80 |
| | Bulk density of second-stage expanded beads | kg/m$^3$ | 22 | 32 | 60 | 15 | 24 | 20 |
| | Bulk density$_{(first-stage\ expansion)}$/bulk density$_{(second-stage\ expansion)}$ | - | 4.5 | 4.8 | 3.9 | 5.5 | 4.8 | 4.6 |
| | State of second-stage expanded beads | - | Good | Good | Good | Good | Good | Good |
| | Volume percentage of closed cells in second-stage expanded beads | % | 90 | 92 | 91 | 90 | 84 | 90 |

(continued)

| | | | Example B1 | Example B2 | Example B3 | Example B4 | Example B5 | Example B6 |
|---|---|---|---|---|---|---|---|---|
| Molded article of expanded beads | Average cell diameter of second-stage expanded beads | μm | 120 | 125 | 90 | 150 | 120 | 120 |
| | Molded article density | kg/m$^3$ | 28 | 40 | 75 | 19 | 30 | 25 |
| | Molding range to yield good article (lower limit-upper limit of steam pressure) | MPa(G) | 0.14-0.16 | 0.14-0.16 | 0.15-0.18 | 0.14-0.16 | 0.14 | 0.14-0.15 |
| | Compression stress at 50% strain | kPa | 125 | 175 | 395 | 95 | 125 | 115 |
| | Compression stress at 50% strain/density | kPa/[kg/m3] | 4.5 | 4.4 | 5.3 | 5.0 | 4.1 | 4.6 |
| | Compression set (at 25% compression) | % | 2.6 | 2.6 | 2.7 | 2.6 | 2.5 | 2.9 |

Table B3

| | | | Comparative Example B1 | Comparative Example B2 | Comparative Example B3 | Comparative Example B4 | Comparative Example B5 | Comparative Example B6 | Comparative Example B7 |
|---|---|---|---|---|---|---|---|---|---|
| Base resin type | | - | LLB4 | LLB4 | LLB5 | LLB5 | LLB6 | LLB7 | LLB8 |
| Production condition of expanded beads | Expanding temperature | °C | 119.2 | 119.3 | 118.4 | 118.6 | 116.8 | 117.5 | 121.1 |
| | Equilibrium vapor pressure | MPa(G) | 4.0 | 4.0 | 4.0 | 4.0 | 4.0 | 4.0 | 4.0 |
| Expandability evaluation | Temperature range to yield good article (lower limit-upper limit of expanding temperature) | °C | None | None | None | None | None | None | 121.5 -122.0 |
| Expanded bead(s) | Total heat of fusion | J/g | 84 | 84 | 81 | 81 | 92 | 81 | 111 |
| | High-temperature peak heat | J/g | 35 | 30 | 35 | 30 | 35 | 35 | 35 |
| | High-temperature peak heat/-Total heat of fusion | - | 0.42 | 0.36 | 0.43 | 0.37 | 0.38 | 0.43 | 0.32 |
| | Biomass degree | % | 0 | 0 | 0 | 0 | 0 | 0 | 0 |
| | Density of base resin | kg/m$^3$ | 918 | 918 | 919 | 919 | 924 | 924 | 926 |
| | Melting point | °C | 117 | 117 | 121 | 121 | 120 | 121 | 121 |
| | MFR (190°C, 2.16 kg) | g/10min | 2.2 | 2.2 | 1.0 | 1.0 | 1.3 | 1.8 | 1.0 |
| | Bulk density of first-stage expanded beads | kg/m$^3$ | 153 | 115 | 184 | 131 | 131 | 123 | 92 |
| | Volume percentage of closed cells in first-stage expanded beads | % | 96 | 96 | 96 | 96 | 96 | 95 | 95 |
| | Average cell diameter of first-stage expanded beads | μm | 65 | 65 | 105 | 105 | 75 | 70 | 45 |
| | Bulk density of second-stage expanded beads | kg/m$^3$ | 34 | 21 | 36 | 21 | 26 | 21 | 31 |
| | Bulk density$_{(first-stage expansion)}$/bulk density$_{(second-stage expansion)}$ | - | 4.5 | 5.5 | 5.1 | 6.1 | 5.1 | 3.0 | 3.0 |

(continued)

| | | | Comparative Example B1 | Comparative Example B2 | Comparative Example B3 | Comparative Example B4 | Comparative Example B5 | Comparative Example B6 | Comparative Example B7 |
|---|---|---|---|---|---|---|---|---|---|
| | State of second-stage expanded beads | - | Bad | Bad | Bad | Bad | Good | Bad | Good |
| | Volume percentage of closed cells in second-stage expanded beads | % | 85 | 85 | 90 | 90 | 90 | 88 | 91 |
| | Average cell diameter of second-stage expanded beads | μm | 110 | 110 | 170 | 170 | 105 | 100 | 60 |
| Molded article of expanded beads | Molded article density | kg/m³ | 42 | 26 | 44 | 26 | 32 | 26 | 38 |
| | Molding range to yield good article (lower limit-upper limit of steam pressure) | MPa(G) | None | None | None | None | 0.11 | 0.10 | 0.14 -0.15 |
| | Compression stress at 50% strain | kPa | Not measured | | | | 140 | 115 | 160 |
| | Compression stress at 50% strain/density | kPa/[kg/m3] | | | | | 4.4 | 4.3 | 4.2 |
| | Compression set (at 25% compression) | % | | | | | 3.1 | 3.0 | 3.2 |

From the results shown in Table B2, it is known that the expanded beads of Examples can be used to produce a molded article of expanded beads over a wide density range and are excellent in in-mold moldability. Also, it is known that the resin particles according to the expanded beads of Examples are excellent in expandability. It is further known that the molded article of polyethylene-based resin expanded beads produced by using the expanded beads of Examples has a small compression set.

**Claims**

1.  An expanded bead comprising a linear low-density polyethylene as a base resin, wherein

    the linear low-density polyethylene has a biomass degree of 40% or more as measured according to ASTM D 6866;
    the expanded bead has a crystal structure where a melting peak intrinsic to the linear low-density polyethylene, an intrinsic peak, and at least one melting peak on a higher temperature side than the intrinsic peak, a high-temperature peak, appear on a DSC curve drawn by heating the expanded bead from 23°C to 200°C at a heating rate of 10°C/min;
    a total heat of fusion of the expanded bead is 70 J/g or more and 100 J/g or less; and a heat of fusion at the high-temperature peak is 10 J/g or more and 50 J/g or less.

2.  The expanded bead according to claim 1, wherein the heat of fusion at the high-temperature peak is 30 J/g or more and 50 J/g or less.

3.  The expanded bead according to claim 1 or 2, wherein a ratio of the heat of fusion at the high-temperature peak to the total heat of fusion of the expanded bead is 0.3 or more and 0.7 or less.

4.  The expanded bead according to any one of claims 1 to 3, wherein a melt flow rate of the expanded bead measured under conditions of a temperature of 190°C and a load of 2.16 kg is 0.1 g/10 min or more and 2.0 g/10 min or less.

5.  The expanded bead according to any one of claims 1 to 4, wherein the linear low-density polyethylene comprises a linear low-density polyethylene A comprising a butene component and a hexene component as copolymerization components.

6.  The expanded bead according to any one of claims 1 to 5, wherein the linear low-density polyethylene has a biomass degree of 70% or more as measured according to ASTM D 6866.

7.  The expanded bead according to any one of claims 1 to 6, wherein a bulk density of the expanded bead is 10 kg/m$^3$ or more and 300 kg/m$^3$ or less.

8.  The expanded bead according to any one of claims 1 to 7, wherein a volume percentage of closed cells in the expanded bead is 80% or more.

9.  The expanded bead according to any one of claims 1 to 8, wherein an average cell diameter of the expanded bead is 60 $\mu$m or more and 200 $\mu$m or less.

10. An expanded bead comprising a linear low-density polyethylene as a base resin, wherein

    the linear low-density polyethylene comprises a butene component and a hexene component as copolymerization components;
    a melt flow rate of the expanded bead measured under conditions of a temperature of 190°C and a load of 2.16 kg is 0.1 g/10 min or more and 2.0 g/10 min or less;
    the expanded bead has a crystal structure where a melting peak intrinsic to the linear low-density polyethylene, an intrinsic peak, and at least one melting peak on a higher temperature side than the intrinsic peak, a high-temperature peak, appear on a DSC curve drawn by heating the expanded bead from 23°C to 200°C at a heating rate of 10°C/min;
    a total heat of fusion of the expanded bead is 70 J/g or more and 100 J/g or less;

a heat of fusion at the high-temperature peak is 30 J/g or more and 50 J/g or less; and
a ratio of the heat of fusion at the high-temperature peak to the total heat of fusion of the expanded bead is 0.3 or more and 0.7 or less.

11. An expanded bead comprising a linear low-density polyethylene as a base resin,
wherein

the linear low-density polyethylene has a density of 920 kg/m$^3$ or less;
the linear low-density polyethylene has a melting point of 120°C or higher and 130°C or lower; and
the linear low-density polyethylene comprises, as copolymerization components, a propylene component and at least one $\alpha$-olefin component ($\alpha$1) selected from the group consisting of a butene component, a hexene component, and an octene component.

12. A molded article of expanded beads produced by in-mold molding the expanded bead according to any one of claims 1 to 11.

## INTERNATIONAL SEARCH REPORT

| International application No. |
|---|
| **PCT/JP2023/007329** |

**A. CLASSIFICATION OF SUBJECT MATTER**

*C08J 9/16*(2006.01)i; *C08J 9/18*(2006.01)i; *B29C 44/00*(2006.01)i; *B29C 44/44*(2006.01)i
FI:    C08J9/16 CES; B29C44/44; B29C44/00 G; C08J9/18 CES

According to International Patent Classification (IPC) or to both national classification and IPC

**B. FIELDS SEARCHED**

Minimum documentation searched (classification system followed by classification symbols)

C08J9/16; C08J9/18; B29C44/00; B29C44/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 61-185536 A (KANEGAFUCHI CHEMICAL INDUSTRY CO., LTD.) 19 August 1986 (1986-08-19)<br>     claims, p. 2, lower right column, line 6 to p. 3, upper left column, last line, examples | 11-12 |
| X | JP 62-15239 A (KANEGAFUCHI CHEMICAL INDUSTRY CO., LTD.) 23 January 1987 (1987-01-23)<br>     claims, p. 3, upper left column, line 1 to upper right column, line 3, examples | 11-12 |
| Y | | 9 |
| X | JP 58-76433 A (JAPAN STYRENE PAPER CORP.) 09 May 1983 (1983-05-09)<br>     claims, p. 2, upper left column, last line to p. 3, upper right column, line 3, examples | 11-12 |
| Y | | 7-9 |
| X | JP 2-43206 A (JAPAN STYRENE PAPER CORP.) 13 February 1990 (1990-02-13)<br>     claims, p. 3, upper left column, line 2 to lower right column, last line, examples, figures | 10-12 |
| Y | | 1-12 |
| Y | WO 2012/121163 A1 (KANEKA CORP.) 13 September 2012 (2012-09-13)<br>     claims, paragraphs [0061]-[0064], [0155], examples | 1-12 |

✓ Further documents are listed in the continuation of Box C.     ✓ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/007329** |

**C.      DOCUMENTS CONSIDERED TO BE RELEVANT**

| Category* | Citation of document, with indication, where appropriate, of the relevant passages | Relevant to claim No. |
| --- | --- | --- |
| Y | JP 2013-60514 A (SEKISUI PLASTICS CO., LTD.) 04 April 2013 (2013-04-04) claims, paragraphs [0025]-[0036], examples | 1-12 |

Form PCT/ISA/210 (second sheet) (January 2015)

## INTERNATIONAL SEARCH REPORT
### Information on patent family members

International application No.

**PCT/JP2023/007329**

| Patent document cited in search report | | | Publication date (day/month/year) | Patent family member(s) | Publication date (day/month/year) |
|---|---|---|---|---|---|
| JP | 61-185536 | A | 19 August 1986 | (Family: none) | |
| JP | 62-15239 | A | 23 January 1987 | US 4968723 A<br>claims, column 3, line 60 to<br>column 6, line 25, examples | |
| JP | 58-76433 | A | 09 May 1983 | (Family: none) | |
| JP | 2-43206 | A | 13 February 1990 | (Family: none) | |
| WO | 2012/121163 | A1 | 13 September 2012 | US 2013/0338246 A1<br>claims, paragraphs [0104]-<br>[0108], [0201], examples | |
| JP | 2013-60514 | A | 04 April 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013060514 A
- JP 2000017079 A
- JP S51022951 B
- JP H04046217 B
- JP H06049795 B
- JP H06022919 B